# EUROPEAN PATENT SPECIFICATION

(11) **EP 3 151 094 B1**
(45) Date of publication and mention of the grant of the patent: **24.04.2019**
(21) Application number: 15799355.1
(22) Date of filing: 18.03.2015
(51) Int. Cl.: G06F 3/041, G06F 3/044, G06F 3/046, G06F 3/0354, G06F 3/0488

(54) **INDICATOR DETECTION DEVICE AND SIGNAL PROCESSING METHOD THEREOF**
INDIKATORERKENNUNGSVORRICHTUNG UND SIGNALVERARBEITUNGSVERFAHREN DAFÜR
DISPOSITIF DE DÉTECTION D'INDICATEUR ET PROCÉDÉ DE TRAITEMENT DE SIGNAL ASSOCIÉ

(30) Priority: 27.05.2014 JP 2014109456
(43) Date of publication of application: 05.04.2017
(73) Proprietor: Wacom Co., Ltd., Kazo-shi, Saitama 349-1148 (JP)
(72) Inventor: HAYASHI Toshiyuki, Kazo-shi Saitama 349-1148 (JP)
(74) Representative: Appelt, Christian W.
(86) International application number: PCT/JP2015/057988
(87) International publication number: WO 2015/182222

(56) References cited:
- EP-A1- 2 028 585
- EP-A2- 0 992 878
- EP-A2- 2 469 383
- EP-A2- 2 600 230
- JP-A- H04 127 315
- JP-A- 2009 265 759
- JP-A- 2011 143 557
- JP-A- 2013 171 544
- JP-A- 2013 196 283
- US-A1- 2013 300 672
- US-A1- 2013 338 963

## Description

### Technical Field

The present invention relates to an indicator detecting device and a signal processing method, and particularly to an indicator detecting device configured to be able to detect the position of an indicator and a signal processing method of the indicator detecting device.

### Background Art

A touch type input system is known which includes an indicator detecting device, which is a plate-shaped input unit, and an indicator such as an electronic pen or a cursor. Some indicator detecting devices may allow a mere stick or a finger of a human to be used as an indicator. Such an input system is generally referred to as a tablet, a digitizer, or the like, and is widely used for a purpose of inputting a character or an illustration on a computer such as a personal computer or a tablet terminal.

Various kinds of systems such as a capacitive system and an electromagnetic induction system are known as concrete systems of the touch type input system. The capacitive system uses a capacitance occurring between an indicator and each of a plurality of linear conductors arranged in a panel surface. The capacitive system is subdivided into a self-capacitance system that detects a change in voltage in each linear conductor and a mutual capacitance system that detects a change in potential difference between linear conductors intersecting each other. The self-capacitance system is further classified into a system that applies a voltage to the linear conductor on an indicator detecting device side and a system that generates a voltage in the linear conductor by transmitting a signal f^{r}om the indicator. The former is used in a case where the indicator is a finger or the like that cannot transmit a signal. The latter is used in a case where the indicator can transmit a signal. In the electromagnetic induction system, on the other hand, electromagnetic waves are transmitted and received between an indicator detecting device and an indicator. Specifically, a plurality of loop-shaped conductors are arranged in the panel surface of the indicator detecting device, and the loop-shaped conductors are used as an antenna to transmit and receive electromagnetic waves between the indicator detecting device and the indicator. The transmission and reception in the electromagnetic induction system are performed on a time-division basis.

Such touch type input systems support input by a plurality of kinds of indicators (an electronic pen and a finger, a touch pen and a finger, or the like). Patent Documents 1 to 4 disclose examples of such input systems.

Directing attention to Patent Document 1 (JP2009265759 A) and making detailed description thereof, a position detecting device described in Patent Document 1 has a configuration in which an input unit is formed by stacking a first detecting unit corresponding to the capacitive system and a second detecting unit corresponding to the electromagnetic induction system. The position detecting device is configured to alternately perform the measurement of the position of a finger and the detection of an electronic pen by operating the first and second detecting units on a time-division basis when the second detecting unit does not detect the electronic pen (position indicator), and operate only the second detecting unit to measure the position of the electronic pen when the second detecting unit detects the electronic pen. This realizes electronic pen input by the second detecting unit suitable for the electronic pen when the electronic pen is in proximity to the input unit, and realizes finger input by the first detecting unit when the electronic pen is not in proximity to the input unit.

In addition, Patent Document 2 (JP2011143557) discloses an electronic pen system that includes a position detecting device corresponding to the mutual capacitance system and a control device configured to be able to communicate with both of the position detecting device and an electronic pen, and which is configured to enable both of electronic pen input and finger input to be performed in parallel by these devices. In addition, Patent Document 3 (JP2012088805) discloses an electronic notebook device configured to be able to determine which of a touch pen and a finger has touched on the basis of the width of a region in which the touch is detected. Patent Document 4 (JP2013164710) discloses an electronic apparatus that includes a capacitive type touch panel configured to be able to detect only a conductor such as a finger and a resistance film type touch panel configured to be able to detect both of a conductor such as a finger and a nonconductor such as a touch pen, and which determines that finger input is performed when a touch is detected by both of the touch panels and determines that touch pen input is performed when a touch is detected by only the resistance film type touch panel.

In addition, some touch type input systems are configured to restrict input in a part of a touch panel according to a dominant hand of a user. Patent Document 5 (US2013/0300672) discloses an example of such an input system.

Making description in more detail, Patent Document 5 discloses a configuration that restricts input to a part of a screen surface according to a dominant hand of a user (the part of the screen surface is a lower right part of the screen surface in a case where the user is right-handed) on the basis of a position touched first, in a drawing system having a touch screen configured to be able to detect a touch by a stylus. This configuration can prevent an erroneous input due to the touching of a palm of the hand of the user to the panel surface.

### Prior Art Documents

### Patent Documents

Patent Document 1: Japanese Patent Laid-Open No. 2009-265759
Patent Document 2: Japanese Patent Laid-Open No. 2011-143557
Patent Document 3: Japanese Patent Laid-Open No. 2012-088805
Patent Document 4: Japanese Patent Laid-Open No. 2013-164710
Patent Document 5: U.S. Patent Application Publication No. 2013/0300672

### Summary of Invention

### Technical Problem

In a touch type input system, it may be convenient not only to restrict input according to a dominant hand of a user but also to restrict input by an indicator only in a partial region within a panel surface. For example, when drawing is performed by an electronic pen in an input system supporting electronic pen input and finger input, erroneous input by a finger (or the palm of a hand) can be prevented by restricting finger input within a drawing region. In addition, when a signature is written in a signature space by an electronic pen in an input system supporting electronic pen input, the signature can be prevented from extending off the signature space by restricting the electronic pen input in a region other than the signature space.

It is accordingly one of the objects of the present invention to provide an indicator detecting device and a signal processing method thereof that can restrict input by an indicator only in a partial region within a panel surface.

### Technical Solution

According to one aspect of the present invention, there is provided an indicator detecting device including: a sensor having a detecting region for detecting an indicator, and configured to output an output signal corresponding to a position indicated by the indicator in the detecting region; a position calculating unit electrically connected to the sensor, and configured to calculate a calculated value indicating the position indicated by the indicator on a basis of the output signal; and a control unit electrically connected to the position calculating unit, and configured to perform signal processing corresponding to the position indicated by the indicator on a basis of the calculated value calculated by the position calculating unit; when a plurality of calculated values calculated by the position calculating unit indicate that the indicator has designated a first designated region within the detecting region, the control unit performing signal processing differing between the calculated value indicating a position corresponding to an inside of the first designated region and the calculated value indicating a position corresponding to an outside of the first designated region.

According to another aspect of the present invention, there is provided an indicator detecting device including: a first sensor having a first detecting region for detecting a first indicator, and configured to output a first output signal corresponding to a position indicated by the first indicator in the first detecting region; a second sensor having a second detecting region for detecting a second indicator, and configured to output a second output signal corresponding to a position indicated by the second indicator in the second detecting region; a position calculating unit electrically connected to each of the first sensor and the second sensor, and configured to calculate a first calculated value indicating the position indicated by the first indicator on a basis of the first output signal, and calculate a second calculated value indicating the position indicated by the second indicator on a basis of the second output signal; and a control unit electrically connected to the position calculating unit, and configured to perform signal processing corresponding to the respective positions indicated by the first indicator and the second indicator on a basis of the first calculated value and the second calculated value calculated by the position calculating unit; when a plurality of first calculated values calculated by the position calculating unit indicate that the first indicator has designated a first designated region within the first detecting region, the control unit performing signal processing differing between the first calculated value indicating a position corresponding to an inside of the first designated region and the first calculated value indicating a position corresponding to an outside of the first designated region, or performing signal processing differing between the second calculated value indicating a position corresponding to the inside of the first designated region and the second calculated value indicating a position corresponding to the outside of the first designated region.

According to yet another aspect of the present invention, there is provided an indicator detecting device including: a sensor having a detecting region for detecting an indicator, and configured to output an output signal corresponding to a position indicated by the indicator in the detecting region; a position calculating unit electrically connected to the sensor, and configured to calculate a calculated value indicating the position indicated by the indicator on a basis of the output signal; and a control unit electrically connected to the position calculating unit, and configured to perform signal processing corresponding to the position indicated by the indicator on a basis of the calculated value calculated by the position calculating unit; when a first designated region within the detecting region has been designated by the indicator, the control unit performing signal processing differing between a case where the position indicated by the indicator is within the first designated region and a case where the position indicated by the indicator is outside the first designated region.

According to the present invention, there is provided an indicator function restricting method including: a step of detecting that an indicator has performed an operation of indicating a first designated region within a detecting region of a sensor having the detecting region for detecting the indicator; a step of calculating a calculated value indicating a position indicated by the indicator on a basis of an output signal of the sensor; and a step of performing signal processing corresponding to the position indicated by the indicator on a basis of the calculated value; the step of performing the signal processing performing signal processing differing between a case where the calculated value indicates a position corresponding to an inside of the first designated region and a case where the calculated value indicates a position corresponding to an outside of the first designated region.

According to one aspect of the present invention, there is provided a signal processing method of an indicator detecting device, the indicator detecting device including a first sensor having a first detecting region for detecting a first indicator and a second sensor having a second detecting region for detecting a second indicator, and the indicator detecting device being configured to perform signal processing corresponding to respective positions indicated by the first indicator and the second indicator, the signal processing method including: a step of obtaining a first output signal corresponding to the position indicated by the first indicator in the first detecting region; a step of obtaining a second output signal corresponding to the position indicated by the second indicator in the second detecting region; a step of obtaining a first calculated value on a basis of the first output signal; a step of obtaining a second calculated value on a basis of the second output signal; a step of determining on a basis of the first calculated value whether or not the first indicator has designated a first designated region within the first detecting region; and a step of performing signal processing differing between the first calculated value indicating a position corresponding to an inside of the first designated region and the first calculated value indicating a position corresponding to an outside of the first designated region, or performing signal processing differing between the second calculated value indicating a position corresponding to the inside of the first designated region and the second calculated value indicating a position corresponding to the outside of the first designated region.

According to another aspect of the present invention, there is provided a signal processing method of an indicator detecting device, the indicator detecting device including a sensor having a detecting region for detecting an indicator, the signal processing method including: a step of obtaining an output signal corresponding to a position indicated by the indicator; a step of obtaining a calculated value corresponding to the indicated position on a basis of the output signal; a step of determining on a basis of the calculated value whether or not the indicator has designated a first designated region within the detecting region; and a step of, when determining that the indicator has designated the first designated region, performing signal processing differing between the calculated value indicating a position corresponding to an inside of the first designated region and the calculated value indicating a position corresponding to an outside of the first designated region. In summary, the invention will be carried out according to the attached independent claims.

### Advantageous Effect

According to the present invention, it is possible to restrict input by an indicator only in a partial region within a panel surface ("inside" or "outside" of the first designated region).

### Brief Description of Drawings

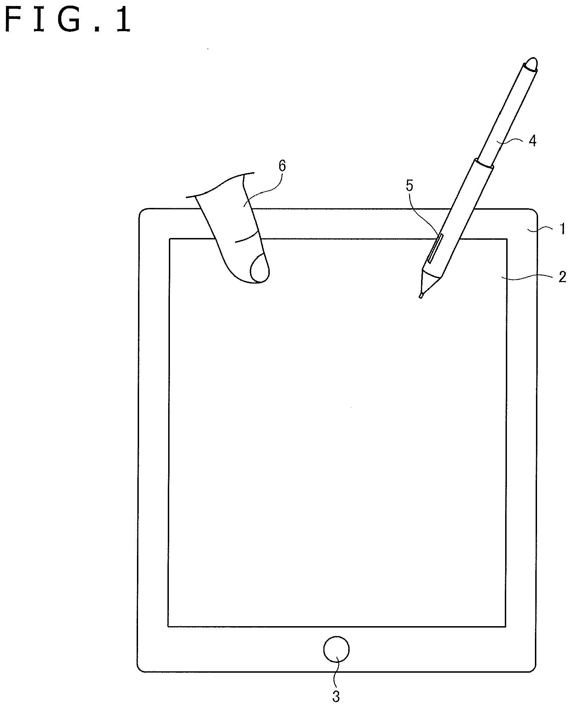

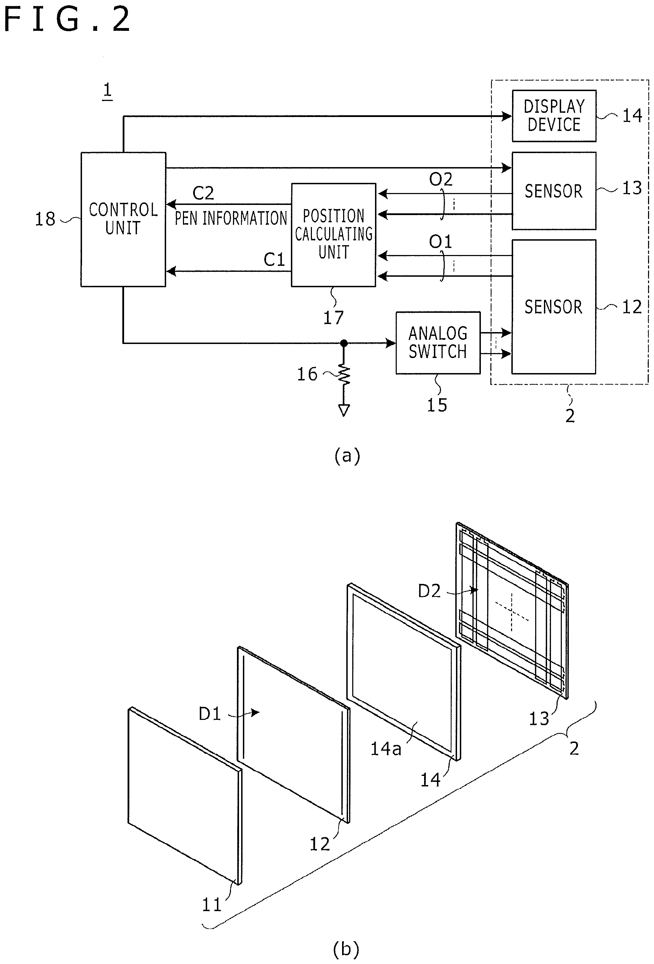

FIG. 1 is a diagram showing an external appearance of a touch type input system according to an embodiment of the present invention.
[FIG. 2]
   (a) is a schematic block diagram showing functional blocks of an indicator detecting device 1 according to the embodiment of the present invention, and (b) is an exploded perspective view showing a structure of a touch panel 2 shown in (a).
[FIG. 3]
   (a) is a plan view showing a sensor 12A as a first concrete example of a sensor 12 shown in FIG. 2(a), (b) is a plan view showing a sensor 12B as a second concrete example of the sensor 12, (c) is a plan view showing a sensor 12C as a third concrete example of the sensor 12, and (d) is a perspective view showing a sensor 12D as a fourth concrete example of the sensor 12.
FIG. 4 is a diagram showing an internal configuration of a sensor 13 shown in FIG. 2(a).
FIG. 5 is a diagram showing a state in which a user has designated a designated region R1 on the touch panel 2 by drawing a rectangle enclosing the periphery of a drawing region A1 using a finger 6.
FIG. 6 is a diagram showing a state in which the user is drawing within the drawing region A1 using an electronic pen 4 wherein input by the finger 6 is restricted in a region on the inside of the designated region R1 shown in FIG. 5.
FIG. 7 is a diagram showing a state in which the user has designated a designated region R2 on the touch panel 2 by drawing a rectangle enclosing the periphery of a signature space A2 using the electronic pen 4.
FIG. 8 is a diagram showing a state in which the user is writing a signature within the signature space A2 using the electronic pen 4, wherein input by the electronic pen 4 is restricted in a region outside the designated region R2 shown in FIG. 7.
FIG. 9 is a diagram showing a flow of an indicator function restricting method according to the embodiment of the present invention.
FIG. 10 is a diagram showing an example of a pop-up screen displayed in step S4 shown in FIG. 9.
FIG. 11 is a diagram showing a first concrete example of region designation reception processing performed in step S1 shown in FIG. 9.
FIG. 12 is a diagram showing a second concrete example of the region designation reception processing performed in step S1 shown in FIG. 9.
FIG. 13 is a diagram showing a third concrete example of the region designation reception processing performed in step S1 shown in FIG. 9.
(a) and (b) are plan views showing a moving state of the electronic pen 4 in a case where the region designation reception processing shown in FIG. 13 is performed.

### Modes for Carrying Out the Invention

A preferred embodiment of the present invention will hereinafter be described in detail with reference to the accompanying drawings.

As shown in FIG. 1, a touch type input system according to the embodiment of the present invention is formed by an indicator detecting device 1 in the shape of a flat plate, which indicator detecting device has a touch panel 2 and a button 3 on one surface thereof, and an electronic pen 4 and a finger 6 as indicators. The electronic pen 4 is a rod-shaped device whose one end is formed so as to be tapered as in a case of a pen tip. The electronic pen 4 has a side switch 5 on a side surface thereof. The finger 6 is generally a finger of a hand of a human.

The indicator detecting device 1 is for example a device having a touch type input mechanism of a tablet, a digitizer, a smart phone, or the like. As shown in FIG. 2(a), the indicator detecting device 1 further includes an analog switch 15, a current-to-voltage converting unit 16, a position calculating unit 17, and a control unit 18. Incidentally, FIG. 2(a) does not show the button 3.

As shown in FIG. 2(b), the touch panel 2 includes: a cover 11 as an insulator; a sensor 12 having a detecting region D1 for detecting an indicator; a sensor 13 having a detecting region D2 for detecting an indicator; and a display device 14 having a display region 14a. The cover 11, the sensors 12 and 13, and the display device 14 are each formed in the shape of a thin flat plate. As shown in FIG. 2(b), the cover 11, the sensor 12, the display device 14, and the sensor 13 are arranged in a stacked manner in this order from the front surface of the indicator detecting device 1 such that the detecting regions D1 and D2 and the display region 14a are superimposed on each other. Incidentally, the display device 14 and the sensor 13 may be arranged in reverse order.

The front surface of the cover 11 constitutes a flat panel surface. A user of the indicator detecting device 1 inputs a character or a drawing by touching the panel surface and tracing the character or the drawing with the electronic pen 4 or the finger 6.

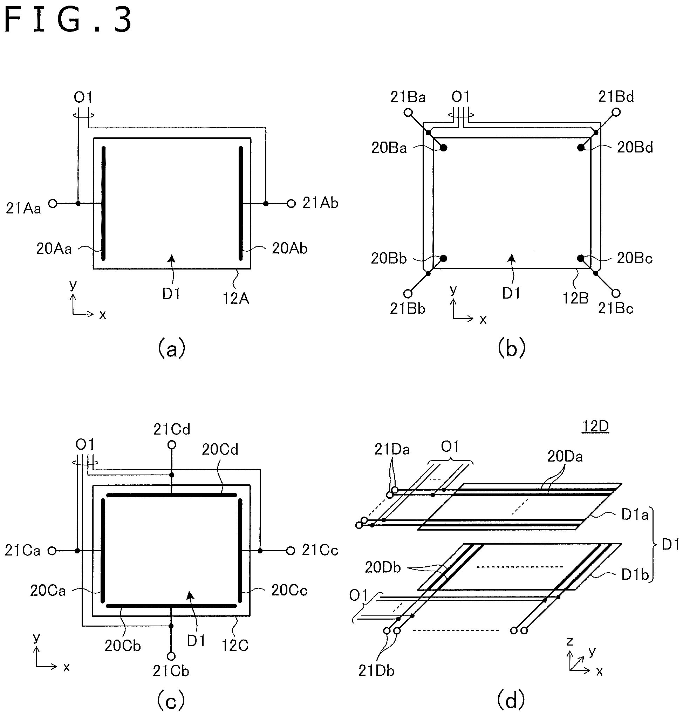

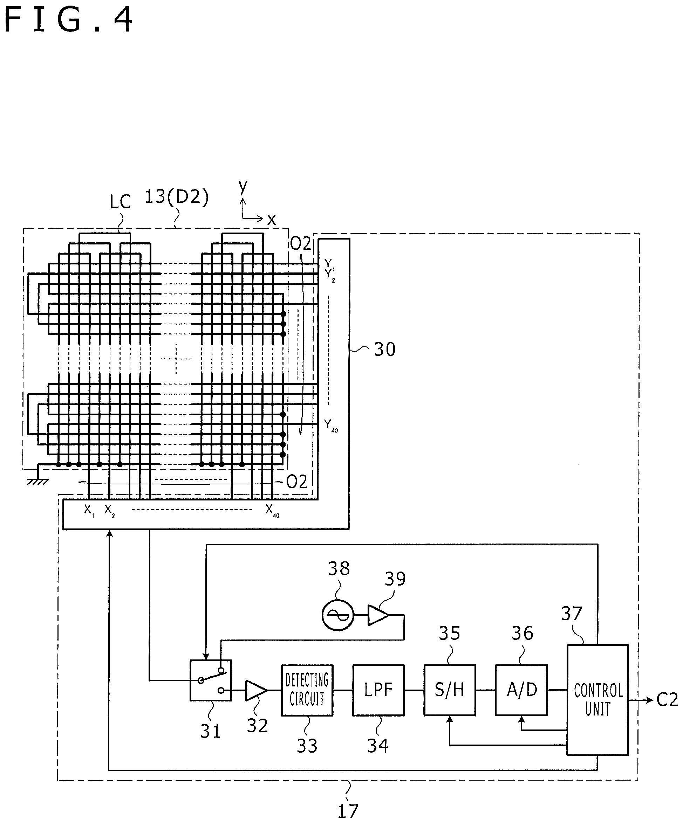

The sensor 12 is a device detecting the finger 6 as an indicator by the capacitive system. The sensor 12 is configured to be able to output an output signal O1 corresponding to a position indicated by the finger 6 in the detecting region D1. On the other hand, the sensor 13 is a device detecting the electronic pen 4 as an indicator by an electromagnetic radiation (EMR) system, which is a kind of electromagnetic induction system. The sensor 13 is configured to be able to output an output signal 02 corresponding to a position indicated by the electronic pen 4 in the detecting region D2. Incidentally, suppose that the sensor 12 does not detect the electronic pen 4, and that the sensor 13 does not detect the finger 6. Details of respective structures of the sensors 12 and 13 will be described later with reference to FIG. 3 and FIG. 4.

The display device 14 is for example a color liquid crystal display. The display device 14 is configured to be able to display an arbitrary character or image in the display region 14a according to a signal from the control unit 18. The cover 11 and the sensors 12 and 13 are each formed so as to be transparent. The user can therefore check video displayed in the display region 14a through the panel surface of the cover 11. Incidentally, while the display device 14 is provided to the touch panel 2 in the present embodiment, the present invention is also applicable to an indicator detecting device (plate tablet or the like) that itself does not have a display function.

The position calculating unit 17 is configured to calculate a calculated value C1 indicating a position indicated by an indicator (finger 6) on the basis of the output signal O1 of the sensor 12, and calculate a calculated value C2 indicating a position indicated by an indicator (electronic pen 4) on the basis of the output signal 02 of the sensor 13. The calculated values C1 and C2 calculated by the position calculating unit 17 are supplied to the control unit 18. In regard to the electronic pen 4, the position calculating unit 17 further has a function of receiving pen information including information indicating a state of depression of the side switch 5 and a pen pressure or the like from the electronic pen 4, and supplying the pen information to the control unit 18.

The control unit 18 is a processor operating according to a program stored in a storage device not shown in the figures. The control unit 18 has functions of controlling various parts of the indicator detecting device 1 and performing various kinds of processing. The control unit 18 also has a function of performing data input and output between the control unit 18 and the storage device not shown in the figures.

More specifically, the control unit 18 is configured to have a function of controlling the sensors 12 and 13 so as to output the output signals O1 and 02, a function of performing signal processing corresponding to positions indicated by the electronic pen 4 and the finger 6 on the basis of the calculated values C1 and C2 calculated by the position calculating unit 17 according to the output signals O1 and 02, and the like. This signal processing includes processing of generating a signal for controlling contents displayed on the display device 14 and supplying the signal to the display device 14.

In addition, the control unit 18 is further configured to have a function of receiving a designation of a region (first designated region) by an indicator by referring to a plurality of calculated values (calculated values C1 or calculated values C2) calculated by the position calculating unit 17 and a function of, when receiving the designation of the region (that is, when the plurality of calculated values indicate that the indicator has designated the region within a corresponding detecting region), afterward performing signal processing differing between a calculated value indicating a position corresponding to the inside of the designated region and a calculated value indicating a position corresponding to the outside of the designated region.

Here, the calculated values referred to when the designation of the designated region is received may be the same as or different from the calculated values for which the signal processing differing between the "inside" and the "outside" of the designated region is performed. That is, the control unit 18 may receive a designation of a region by referring to calculated values C1, and afterward perform signal processing differing between a calculated value C1 indicating a position corresponding to the inside of the designated region and a calculated value C1 indicating a position corresponding to the outside of the designated region, may receive a designation of a region by referring to calculated values C2, and afterward perform signal processing differing between a calculated value C1 indicating a position corresponding to the inside of the designated region and a calculated value C1 indicating a position corresponding to the outside of the designated region, may receive a designation of a region by referring to calculated values C1, and afterward perform signal processing differing between a calculated value C2 indicating a position corresponding to the inside of the designated region and a calculated value C2 indicating a position corresponding to the outside of the designated region, or may receive a designation of a region by referring to calculated values C2, and afterward perform signal processing differing between a calculated value C2 indicating a position corresponding to the inside of the designated region and a calculated value C2 indicating a position corresponding to the outside of the designated region. In addition, the control unit 18 may receive a designation of a region by referring to calculated values C1 or calculated values C2, and afterward perform signal processing differing between a calculated value C1 indicating a position corresponding to the inside of the designated region and a calculated value C1 indicating a position corresponding to the outside of the designated region and perform signal processing differing between a calculated value C2 indicating a position corresponding to the inside of the designated region and a calculated value C2 indicating a position corresponding to the outside of the designated region.

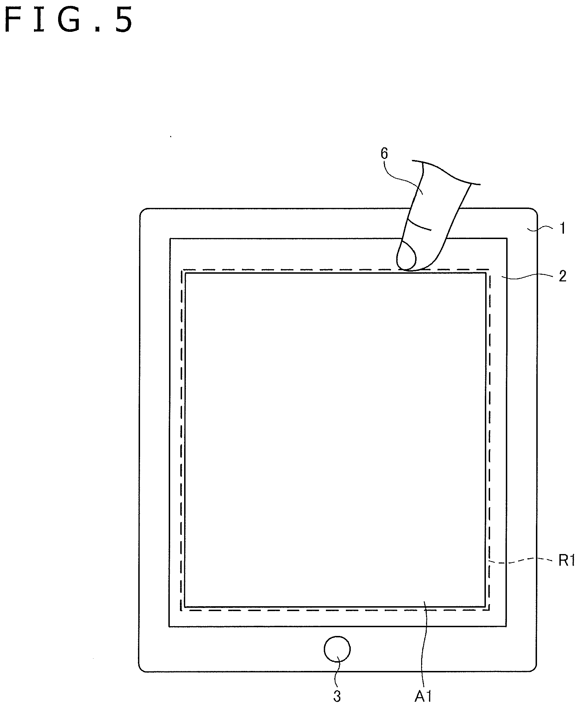

Further, the control unit 18 may further have a function of allowing the user to select one of the "inside" and the "outside" of the designated region and select one of the "electronic pen" and the "finger." In this case, supposing that the user selects the "outside" and the "electronic pen," for example, it suffices for the control unit 18 to perform signal processing as usual for a calculated value C1 and a calculated value C2 indicating a position corresponding to the inside of the designated region, while not performing signal processing for a calculated value C2 indicating a position corresponding to the outside of the designated region. It is thereby possible to provide the user with a user experience such that the electronic pen 4 functions only within the designated region. This point will be described again later by citing more concrete examples with reference to FIGS. 5 to 14.

The current-to-voltage converting unit 16 is a device for converting a current signal supplied from the control unit 18 into a voltage signal. Specifically, as shown in FIG. 2(a), the current-to-voltage converting unit 16 is formed by a resistor having one end connected to wiring extending from the control unit 18 to the analog switch 15 and having another end grounded. A voltage signal obtained by the current-to-voltage converting unit 16 is supplied to the sensor 12 via the analog switch 15. In this case, as will be described later in detail with reference to FIG. 3, the sensor 12 is provided with a plurality of terminals. The analog switch 15 has a function of selectively supplying the voltage signal supplied from the current-to-voltage converting unit 16 to a part of these terminals while selectively supplying a ground potential to another part of the terminals, and further setting the remaining terminals in a floating state.

A configuration and operation of the sensor 12 will next be described in detail with reference to FIG. 3. Incidentally, sensors 12A to 12D shown in FIGS. 3(a) to 3(d) are each a concrete example of the sensor 12, and can each function singly as the sensor 12.

The sensor 12A shown in FIG. 3(a) has a detecting region D1 disposed in a central portion thereof. The sensor 12A is configured to be able to detect a position indicated by the finger 6 in the detecting region D1 only in an x-direction (longitudinal direction of the rectangular sensor 12A) shown in the figure.

Specifically, as shown in the figure, the sensor 12A includes an electrode 20Aa disposed along one short side of the sensor 12A, an electrode 20Ab disposed along another short side, and terminals 21Aa and 21Ab connected to the electrodes 20Aa and 20Ab, respectively. In the sensor 12A, a region sandwiched between the electrodes 20Aa and 20Ab forms the detecting region D1. The terminals 21Aa and 21Ab are each connected to the analog switch 15 shown in FIG. 2(a). In addition, output signals O1 of the sensor 12A are extracted from each of the terminals 21Aa and 21Ab.

The calculation of a calculated value C1 in the case where the sensor 12A is used as the sensor 12 is performed as follows. First, the control unit 18 controls the analog switch 15 so that the voltage signal output from the current-to-voltage converting unit 16 is supplied to the terminal 21Aa and the ground potential is supplied to the terminal 21Ab. When the control unit 18 further outputs a current signal to the current-to-voltage converting unit 16, the analog switch 15 acts to supply the voltage signal output from the current-to-voltage converting unit 16 to the terminal 21Aa and supply the ground potential to the terminal 21Ab. Consequently, in the detecting region D1, a potential slope is formed from the electrode 20Aa to the electrode 20Ab. At this time, when the finger 6 is in proximity to or in contact with the detecting region D1, a charge moves through the human body, so that a current flows through the terminal 21Aa. This current change is supplied as an output signal O1 to the position calculating unit 17.

Next, the control unit 18 controls the analog switch 15 again so that the voltage signal output from the current-to-voltage converting unit 16 is supplied to the terminal 21Ab and the ground potential is supplied to the terminal 21Aa. When the control unit 18 further outputs a current signal to the current-to-voltage converting unit 16, the analog switch 15 acts to supply the voltage signal output from the current-to-voltage converting unit 16 to the terminal 21Ab and supply the ground potential to the terminal 21Aa. Consequently, in the detecting region D1, a potential slope is formed from the electrode 20Ab to the electrode 20Aa. At this time, when the finger 6 is in proximity to or in contact with the detecting region D1, a charge moves through the human body, so that a current flows through the terminal 21Ab. This current change is supplied as an output signal O1 to the position calculating unit 17.

The position calculating unit 17 calculates a ratio between the current change of the terminal 21Aa and the current change of the terminal 21Ab from the two output signals O1 thus supplied consecutively. The position calculating unit 17 then calculates the x-coordinate of the contact position of the finger 6 (position indicated by the finger 6) within the detecting region D1 from the calculated ratio. The calculated value C1 in the case where the sensor 12A is used as the sensor 12 is represented by the thus calculated x-coordinate.

Next, the sensor 12B shown in FIG. 3(b) has a detecting region D1 disposed in a central portion thereof. The sensor 12B is configured to be able to detect a position indicated by the finger 6 in the detecting region D1 in both of an x-direction (longitudinal direction of the rectangular sensor 12B) and a y-direction (direction orthogonal to the x-direction within the plane of the detecting region D1) shown in the figure.

Specifically, as shown in the figure, the sensor 12B has a configuration in which dot-shaped electrodes 20Ba to 20Bd are arranged counterclockwise at four corners of the sensor 12B and these electrodes 20Ba to 20Bd are connected to terminals 21Ba to 21Bd, respectively. In the sensor 12B, a rectangular region having the electrodes 20Ba to 20Bd as respective vertices forms the detecting region D1. The terminals 21Ba to 21Bd are each connected to the analog switch 15 shown in FIG. 2(a). In addition, output signals O1 of the sensor 12B are extracted from each of the terminals 21Ba to 21Bd.

The calculation of a calculated value C1 in the case where the sensor 12B is used as the sensor 12 is performed as follows. First, the control unit 18 controls the analog switch 15 so that the voltage signal output from the current-to-voltage converting unit 16 is supplied to the terminals 21Ba and 21Bb and the ground potential is supplied to the terminals 21Bc and 21Bd. When the control unit 18 further outputs a current signal to the current-to-voltage converting unit 16, the analog switch 15 acts to supply the voltage signal output from the current-to-voltage converting unit 16 to the terminals 21Ba and 21Bb and supply the ground potential to the terminals 21Bc and 21Bd. Consequently, in the detecting region D1, a potential slope is formed from one end in the x-direction (end portion in which the electrodes 20Ba and 20Bb are arranged) to another end in the x-direction (end portion in which the electrodes 20Bc and 20Bd are arranged). At this time, when the finger 6 is in proximity to or in contact with the detecting region D1, a charge moves through the human body, so that a current flows through the terminals 21Ba and 21Bb. This current change is supplied as an output signal O1 to the position calculating unit 17.

Next, the control unit 18 controls the analog switch 15 again so that the voltage signal output from the current-to-voltage converting unit 16 is supplied to the terminals 21Bc and 21Bd and the ground potential is supplied to the terminals 21Ba and 21Bb. When the control unit 18 further outputs a current signal to the current-to-voltage converting unit 16, the analog switch 15 acts to supply the voltage signal output from the current-to-voltage converting unit 16 to the terminals 21Bc and 21Bd and supply the ground potential to the terminals 21Ba and 21Bb. Consequently, in the detecting region D1, a potential slope is formed from the other end in the x-direction (end portion in which the electrodes 20Bc and 20Bd are arranged) to the one end in the x-direction (end portion in which the electrodes 20Ba and 20Bb are arranged). At this time, when the finger 6 is in proximity to or in contact with the detecting region D1, a charge moves through the human body, so that a current flows through the terminals 21Bc and 21Bd. This current change is supplied as an output signal O1 to the position calculating unit 17.

The position calculating unit 17 calculates a ratio between the current change of the terminals 21Ba and 21Bb and the current change of the terminals 21Bc and 21Bd from the two output signals O1 thus supplied consecutively. The position calculating unit 17 then calculates the x-coordinate of the contact position of the finger 6 (position indicated by the finger 6) within the detecting region D1 from the calculated ratio.

Next, the control unit 18 controls the analog switch 15 again so that the voltage signal output from the current-to-voltage converting unit 16 is supplied to the terminals 21Ba and 21Bd and the ground potential is supplied to the terminals 21Bb and 21Bc. When the control unit 18 further outputs a current signal to the current-to-voltage converting unit 16, the analog switch 15 acts to supply the voltage signal output from the current-to-voltage converting unit 16 to the terminals 21Ba and 21Bd and supply the ground potential to the terminals 21Bb and 21Bc. Consequently, in the detecting region D1, a potential slope is formed from one end in the y-direction (end portion in which the electrodes 20Ba and 20Bd are arranged) to another end in the y-direction (end portion in which the electrodes 20Bb and 20Bc are arranged). At this time, when the finger 6 is in proximity to or in contact with the detecting region D1, a charge moves through the human body, so that a current flows through the terminals 21Ba and 21Bd. This current change is supplied as an output signal O1 to the position calculating unit 17.

Next, the control unit 18 controls the analog switch 15 again so that the voltage signal output from the current-to-voltage converting unit 16 is supplied to the terminals 21Bb and 21Bc and the ground potential is supplied to the terminals 21Ba and 21Bd. When the control unit 18 further outputs a current signal to the current-to-voltage converting unit 16, the analog switch 15 acts to supply the voltage signal output from the current-to-voltage converting unit 16 to the terminals 21Bb and 21Bc and supply the ground potential to the terminals 21Ba and 21Bd. Consequently, in the detecting region D1, a potential slope is formed from the other end in the y-direction (end portion in which the electrodes 20Bb and 20Bc are arranged) to the one end in the y-direction (end portion in which the electrodes 20Ba and 20Bd are arranged). At this time, when the finger 6 is in proximity to or in contact with the detecting region D1, a charge moves through the human body, so that a current flows through the terminals 21Bb and 21Bc. This current change is supplied as an output signal O1 to the position calculating unit 17.

The position calculating unit 17 calculates a ratio between the current change of the terminals 21Ba and 21Bd and the current change of the terminals 21Bb and 21Bc from the two output signals O1 thus supplied consecutively. The position calculating unit 17 then calculates the y-coordinate of the contact position of the finger 6 (position indicated by the finger 6) within the detecting region D1 from the calculated ratio.

Thus, the position calculating unit 17 is configured to calculate the x-coordinate and the y-coordinate sequentially. The calculated value C1 in the case where the sensor 12B is used as the sensor 12 is represented by the x-coordinate and the y-coordinate thus calculated.

Next, as with the sensor 12B, the sensor 12C shown in FIG. 3(c) has a detecting region D1 disposed in a central portion thereof, and is configured to be able to detect a position indicated by the finger 6 in the detecting region D1 in both of an x-direction (longitudinal direction of the rectangular sensor 12C) and a y-direction (direction orthogonal to the x-direction within the plane of the detecting region D1) shown in the figure.

Specifically, as shown in the figure, the sensor 12C has a configuration in which linear electrodes 20Ca to 20Cd are arranged counterclockwise along each of four sides of the sensor 12C and these electrodes 20Ca to 20Cd are connected to terminals 21Ca to 21Cd, respectively. In the sensor 12C, a rectangular region enclosed by the electrodes 20Ca to 20Cd forms the detecting region D1. The terminals 21Ca to 21Cd are each connected to the analog switch 15 shown in FIG. 2(a). In addition, output signals O1 of the sensor 12C are extracted from each of the terminals 21Ca to 21Cd.

The calculation of a calculated value C1 in the case where the sensor 12C is used as the sensor 12 is performed as follows. First, the control unit 18 controls the analog switch 15 so that the voltage signal output from the current-to-voltage converting unit 16 is supplied to the terminal 21Ca, the ground potential is supplied to the terminal 21Cc, and the terminals 21Cb and 21Cd are set in a floating state. When the control unit 18 further outputs a current signal to the current-to-voltage converting unit 16, the analog switch 15 acts to supply the voltage signal output from the current-to-voltage converting unit 16 to the terminal 21Ca, supply the ground potential to the terminal 21Cc, and set the terminals 21Cb and 21Cd in a floating state. Consequently, in the detecting region D1, a potential slope is formed from one end in the x-direction (end portion in which the electrode 20Ca is disposed) to another end in the x-direction (end portion in which the electrode 20Cc is disposed). At this time, when the finger 6 is in proximity to or in contact with the detecting region D1, a charge moves through the human body, so that a current flows through the terminal 21Ca. This current change is supplied as an output signal O1 to the position calculating unit 17.

Next, the control unit 18 controls the analog switch 15 again so that the voltage signal output from the current-to-voltage converting unit 16 is supplied to the terminal 21Cc, the ground potential is supplied to the terminal 21Ca, and the terminals 21Cb and 21Cd are set in a floating state. When the control unit 18 further outputs a current signal to the current-to-voltage converting unit 16, the analog switch 15 acts to supply the voltage signal output from the current-to-voltage converting unit 16 to the terminal 21Cc, supply the ground potential to the terminal 21Ca, and set the terminals 21Cb and 21Cd in a floating state. Consequently, in the detecting region D1, a potential slope is formed from the other end in the x-direction (end portion in which the electrode 20Cc is disposed) to the one end in the x-direction (end portion in which the electrode 20Ca is disposed). At this time, when the finger 6 is in proximity to or in contact with the detecting region D1, a charge moves through the human body, so that a current flows through the terminal 21Cc. This current change is supplied as an output signal O1 to the position calculating unit 17.

The position calculating unit 17 calculates a ratio between the current change of the terminal 21Ca and the current change of the terminal 21Cc from the two output signals O1 thus supplied consecutively. The position calculating unit 17 then calculates the x-coordinate of the contact position of the finger 6 (position indicated by the finger 6) within the detecting region D1 from the calculated ratio.

Next, the control unit 18 controls the analog switch 15 again so that the voltage signal output from the current-to-voltage converting unit 16 is supplied to the terminal 21Cb, the ground potential is supplied to the terminal 21Cd, and the terminals 21Ca and 21Cc are set in a floating state. When the control unit 18 further outputs a current signal to the current-to-voltage converting unit 16, the analog switch 15 acts to supply the voltage signal output from the current-to-voltage converting unit 16 to the terminal 21Cb, supply the ground potential to the terminal 21Cd, and set the terminals 21Ca and 21Cc in a floating state. Consequently, in the detecting region D1, a potential slope is formed from one end in the y-direction (end portion in which the electrode 20Cb is disposed) to another end in the y-direction (end portion in which the electrode 20Cd is disposed). At this time, when the finger 6 is in proximity to or in contact with the detecting region D1, a charge moves through the human body, so that a current flows through the terminal 21Cb. This current change is supplied as an output signal O1 to the position calculating unit 17.

Next, the control unit 18 controls the analog switch 15 again so that the voltage signal output from the current-to-voltage converting unit 16 is supplied to the terminal 21Cd, the ground potential is supplied to the terminal 21Cb, and the terminals 21Ca and 21Cc are set in a floating state. When the control unit 18 further outputs a current signal to the current-to-voltage converting unit 16, the analog switch 15 acts to supply the voltage signal output from the current-to-voltage converting unit 16 to the terminal 21Cd, supply the ground potential to the terminal 21Cb, and set the terminals 21Ca and 21Cc in a floating state. Consequently, in the detecting region D1, a potential slope is formed from the other end in the y-direction (end portion in which the electrode 20Cd is disposed) to the one end in the y-direction (end portion in which the electrode 20Cb is disposed). At this time, when the finger 6 is in proximity to or in contact with the detecting region D1, a charge moves through the human body, so that a current flows through the terminal 21Cd. This current change is supplied as an output signal O1 to the position calculating unit 17.

The position calculating unit 17 calculates a ratio between the current change of the terminal 21Cb and the current change of the terminal 21Cd from the two output signals O1 thus supplied consecutively. The position calculating unit 17 then calculates the y-coordinate of the contact position of the finger 6 (position indicated by the finger 6) within the detecting region D1 from the calculated ratio.

Thus, the position calculating unit 17 is configured to calculate the x-coordinate and the y-coordinate sequentially. The calculated value C1 in the case where the sensor 12C is used as the sensor 12 is represented by the x-coordinate and the y-coordinate thus calculated.

Next, unlike the sensors 12A to 12C, the sensor 12D shown in FIG. 3(d) has a detecting region D1 formed by two detecting regions D1a and D1b laminated in a z-direction, and is configured to be able to detect a position indicated by the finger 6 in the detecting region D1 in both of an x-direction (direction orthogonal to the z-direction) and a y-direction (direction orthogonal to each of the x-direction and the z-direction) shown in the figure.

Specifically, the sensor 12D has a configuration in which a plurality of electrodes 20Da each extending in the x-direction are arranged at equal intervals in the detecting region D1a and a plurality of electrodes 20Db each extending in the y-direction are arranged at equal intervals in the detecting region D1b. According to this configuration, capacitors are formed at points of intersection of the electrodes 20Da and the electrodes 20Db. This means that the sensor 12D has a configuration in which a plurality of capacitors are arranged in the form of a matrix. In addition, the sensor 12D has a plurality of terminals 21Da connected to the respective electrodes 20Da, and has a plurality of terminals 21Db connected to the respective electrodes 20Db. The plurality of terminals 21Da and the plurality of terminals 21Db are each connected to the analog switch 15 shown in FIG. 2(a). In addition, output signals O1 of the sensor 12C are extracted from each of the plurality of terminals 21Da and 21Db.

The calculation of a calculated value C1 in the case where the sensor 12D is used as the sensor 12 is performed as follows. First, the control unit 18 controls the analog switch 15 so that the voltage signal output from the current-to-voltage converting unit 16 is supplied to each terminal 21Da and the ground potential is supplied to each terminal 21Db. When the control unit 18 further outputs a current signal to the current-to-voltage converting unit 16, the analog switch 15 acts to supply the voltage signal output from the current-to-voltage converting unit 16 to each terminal 21Da and supply the ground potential to each terminal 21Db. At this time, when the finger 6 is in proximity to or in contact with the detecting region D1, capacitive induction occurring between capacitors and the finger 6 causes a capacitor closer to the finger 6 to vary a charge stored therein more greatly.

The position calculating unit 17 detects a variation in charge of each capacitor from a plurality of output signals O1 supplied from the sensor 12D. The position calculating unit 17 then calculates the x-coordinate and the y-coordinate of the contact position of the finger 6 (position indicated by the finger 6) within the detecting region D1 on the basis of the magnitudes of the detected variations, and supplies the x-coordinate and the y-coordinate as a calculated value C1 to the control unit 18. Incidentally, the sensor 12D can detect a plurality of fingers 6 simultaneously. In this case, the position calculating unit 17 calculates a plurality of calculated values C1, and supplies the plurality of calculated values C1 to the control unit 18.

The configurations and operations of the sensor 12 have been described above in detail by citing four concrete examples. A configuration and operation of the sensor 13 (FIG. 1) will next be described in detail with reference to FIG. 4.

As shown in FIG. 4, the sensor 13 has a configuration in which a plurality of loop coils LC are arranged within the detecting region D2. One end of each loop coil LC is grounded. Another end of each loop coil LC is connected to the position calculating unit 17. Output signals 02 of the sensor 13 are formed by signals appearing at the other end of each loop coil LC thus connected to the position calculating unit 17. FIG. 4 illustrates, as an example of the plurality of loop coils LC, 40 loop coils X₁ to X₄₀ extending in a y-direction and 40 Y₁ to Y₄₀ extending in an x-direction. The following description will be continued assuming the 80 loop coils X₁ to X₄₀ and Y₁ to Y₄₀. However, the number of loop coils LC to be provided to the sensor 13 is not limited to this.

For the sensor 13, as shown in FIG. 4, the position calculating unit 17 includes a selecting circuit 30, a switch circuit 31, an amplifier 32, a detecting circuit 33, a low-pass filter (LPF) 34, a sample and hold circuit (S/H) 35, an analog-to-digital converting circuit (A/D) 36, a control unit 37, an oscillator 38, and a current driver 39.

The selecting circuit 30 is connected with the other end of each loop coil LC. The selecting circuit 30 is thereby supplied with the output signals 02 of the sensor 13. The selecting circuit 30 selects one or more of the loop coils X₁ to X₄₀ and Y₁ to Y₄₀ according to the control of the control unit 37, and connects the selected one or more loop coils to the switch circuit 31.

The switch circuit 31 is formed by a single-pole double-throw switch configured to be switchable according to the control of the control unit 37. The switch circuit 31 has a common terminal connected to the selecting circuit 30, has one selecting terminal connected to an input terminal of the amplifier 32, and has another selecting terminal connected to an output terminal of the current driver 39.

The amplifier 32 has a function of amplifying a voltage signal supplied from the selecting circuit 30 via the switch circuit 31, and outputting the voltage signal to the detecting circuit 33. The detecting circuit 33 generates an envelope signal by performing envelope detection on the voltage signal output from the amplifier 32, and outputs the envelope signal to the low-pass filter 34. The low-pass filter 34 plays a role of removing a high-frequency component from the envelope signal generated by the detecting circuit 33. The sample and hold circuit 35 is configured to sample and hold the envelope signal, whose high-frequency component has been removed by the low-pass filter 34, at predetermined time intervals. The analog-to-digital converting circuit 36 generates a digital signal by subjecting the signal held by the sample and hold circuit 35 to analog-to-digital converting. The analog-to-digital converting circuit 36 outputs the digital signal to the control unit 37.

The control unit 37 is a processor operating according to a program stored in a storage device not shown in the figure. Incidentally, the control unit 37 and the control unit 18 (FIG. 2) may be implemented by a common processor. Operations performed by the control unit 37 include control of the selecting circuit 30, the switch circuit 31, the sample and hold circuit 35, and the analog-to-digital converting circuit 36 and processing of calculating the calculated value C2 described above (value indicating a position indicated by an indicator (electronic pen 4)) on the basis of the digital signal supplied from the analog-to-digital converting circuit 36.

The oscillator 38 is configured to generate an alternating-current signal having a predetermined frequency. The current driver 39 plays a role of converting the alternating-current signal output from the oscillator 38 into a current signal, and supplying the current signal to the switch circuit 31.

The calculation of the calculated value C2 and the obtainment of pen information are specifically performed as follows. First, the control unit 37 connects the other selecting terminal (selecting terminal connected to the current driver 39) of the switch circuit 31 to the common terminal, and makes the selecting circuit 30 select one of the loop coils X₁ to X₄₀ and Y₁ to Y₄₀. Then, the current signal output from the current driver 39 causes a magnetic field to occur in the selected loop coil LC. Incidentally, while one loop coil LC is selected in this case, a total of two loop coils LC, that is, one loop coil LC among the loop coils X₁ to X₄₀ and one loop coil LC among the loop coils Y₁ to Y₄₀ may be selected, for example. In addition, a loop coil dedicated to the generation of a magnetic field may be disposed along the periphery of the detecting region D2 separately from the loop coils X₁ to X₄₀ and Y₁ to Y₄₀, and only the dedicated loop coil may be selected in this stage.

The electronic pen 4 includes a resonance circuit (not shown). The electronic pen 4 is configured to operate using, as power, an induced voltage generated in the resonance circuit when entering the magnetic field generated as described above. The thus performed operation of the electronic pen 4 includes first transmitting a continuous signal for position detection over a predetermined time and then sequentially transmitting a start signal indicating an end of the continuous signal and pen information.

After the passage of a predetermined time since the other selecting terminal of the switch circuit 31 was connected to the common terminal, the control unit 37 next connects the one selecting terminal (selecting terminal connected to the amplifier 32) of the switch circuit 31 to the common terminal. Then, the generation of the magnetic field from the loop coil LC is ended. The electronic pen 4 is configured to start transmitting the continuous signal in this timing.

The control unit 37 scans a voltage generated in each of the loop coils X₁ to X₄₀ and Y₁ to Y₄₀ by consecutively changing the loop coil LC selected by the selecting circuit 30 while the electronic pen 4 is transmitting the continuous signal. The thus detected voltage is increased as a distance between the loop coil LC and the electronic pen 4 is shortened. The control unit 37 can therefore calculate a calculated value C2 indicating the position of the electronic pen 4 from a result of the scanning. The control unit 37 thus calculates the calculated value C2, and outputs the calculated value C2 to the control unit 18.

In order to shorten a scanning time, the scanning of all of the loop coils LC and the position detection as described above may be performed only for a first time (in this case, the first position detection is performed with the start signal and the pen information regarded as the continuous signal while the electronic pen 4 is transmitting the start signal and the pen information), and only loop coils LC located in the vicinity of a position detected the previous time may be scanned from a second time.

On the other hand, in the timing in which the electronic pen 4 transmits the pen information, the control unit 37 makes the selecting circuit 30 select one of the loop coils LC according to the detected position of the electronic pen 4 (usually a loop coil LC closest to the detected position of the electronic pen 4). Then, the control unit 37 obtains the pen information transmitted by the electronic pen 4 through the thus selected loop coil LC, and outputs the pen information to the control unit 18.

A configuration and operation of the sensor 13 have been described above in detail.

The control unit 18 makes the sensors 12 and 13 and the position calculating unit 17 perform the above processing repeatedly while power to the indicator detecting device 1 is on. Thus, the control unit 18 continues to be constantly supplied with the calculated value C1 indicating the position indicated by the finger 6 at certain time intervals as long as the finger 6 is detected, and continues to be constantly supplied with the calculated value C2 indicating the position indicated by the electronic pen 4 at certain time intervals as long as the electronic pen 4 is detected.

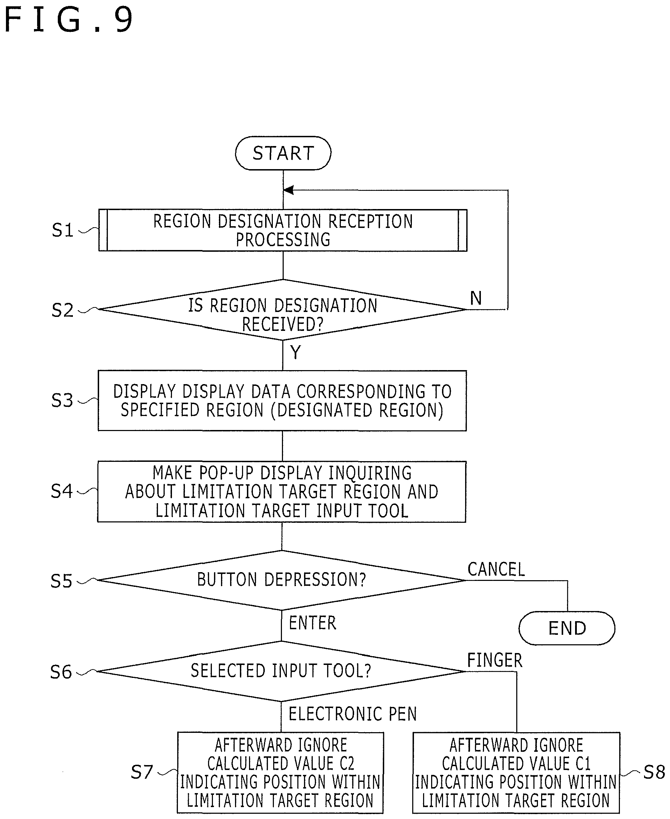

Processing performed by the control unit 18 to restrict input by an indicator only in a partial region within the panel surface will be described in detail in the following. In the following, operation of the indicator detecting device 1 as viewed from the user will first be described with reference to FIGS. 5 to 8. Processing performed by the control unit 18 to realize the operation will then be described with reference to FIGS. 9 to 14.

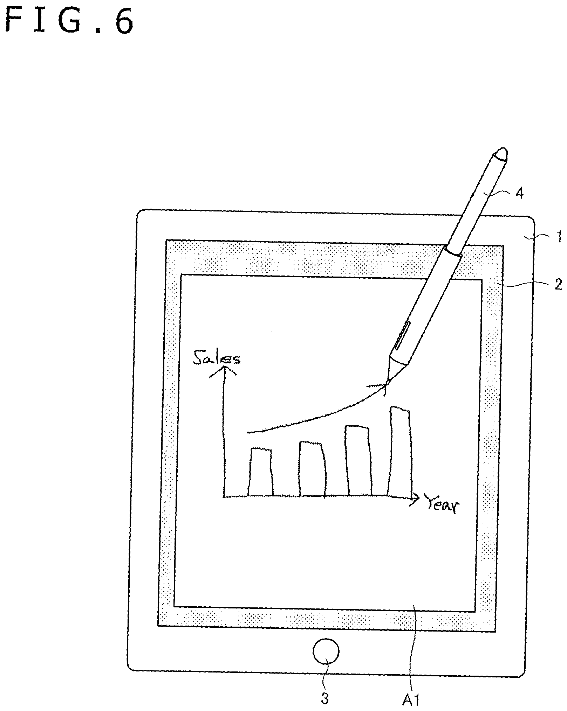

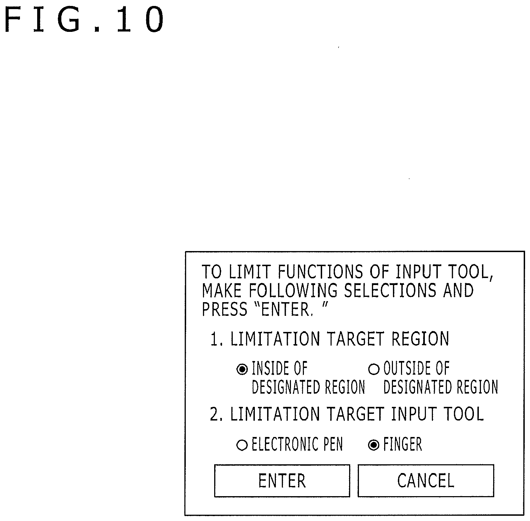

First, FIG. 5 and FIG. 6 represent a case where a drawing region A1 is displayed on the touch panel 2 and the user desires to draw a picture with the electronic pen 4 within the drawing region A1. Before the user starts to draw, the user describes a rectangular designated region R1 with the finger 6 or the electronic pen 4 so as to surround the rectangular drawing region A1. Then, a region outside the designated region R1 is thinly shaded as shown in FIG. 6, and a pop-up screen as shown in FIG. 10 to be described later is displayed to inquire of the user about a concrete method of restricting functions of an input tool.

FIG. 6 represents a case where the user selects the "inside of the designated region" as a restriction target region and selects "finger" as a restriction target input tool on the displayed pop-up screen. After the user makes such selections, when the calculated value C1 supplied from the position calculating unit 17 indicates a position within the designated region R1, the control unit 18 performs processing while ignoring the calculated value C1. Thus, even when the finger 6 of the user touches the region within the designated region R1, the touch is entirely ignored. The user can therefore enjoy drawing with the electronic pen 4 without being bothered by an erroneous operation caused by the touching of the finger 6.

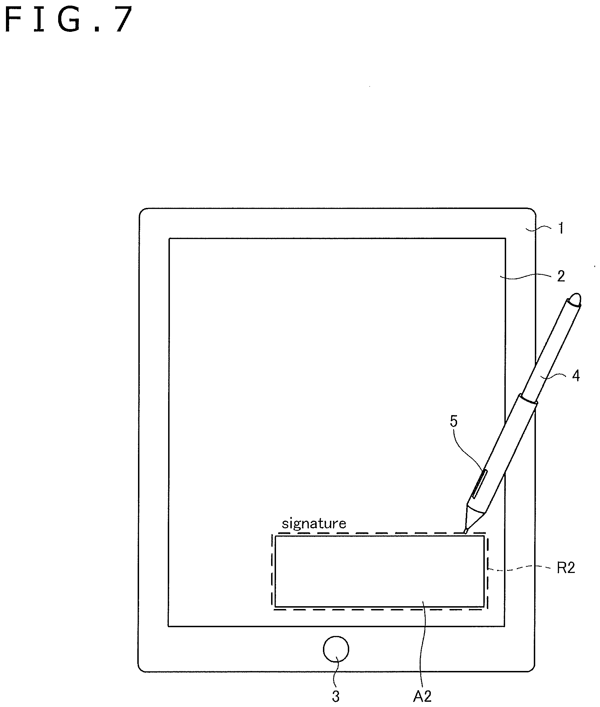

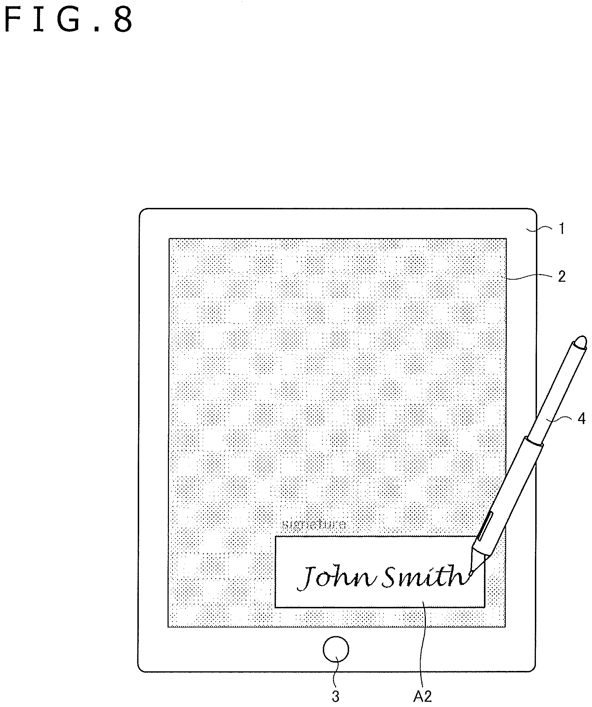

Next, FIG. 7 and FIG. 8 represent a case where a signature space A2 is displayed on the touch panel 2 and the user intends to sign with the electronic pen 4 within the signature space A2. Before the user starts to write a signature, the user describes a rectangular designated region R2 with the finger 6 or the electronic pen 4 so as to surround the rectangular drawing region A1. Then, as shown in FIG. 8, a region outside the designated region R2 is shaded in a manner similar to the example of FIG. 6, and a pop-up screen as shown in FIG. 10 is displayed to inquire of the user about a concrete method of restricting functions of an input tool.

FIG. 8 represents a case where the user selects the "outside of the designated region" as a restriction target region and selects "electronic pen" as a restriction target input tool on the displayed pop-up screen. After the user makes such selections, when the calculated value C2 supplied from the position calculating unit 17 indicates a position outside the designated region R2, the control unit 18 performs processing while ignoring the calculated value C2. Thus, even when the electronic pen 4 touches the region outside the designated region R2, the touch is entirely ignored. The user can therefore write a signature within the signature space A2 without the signature extending off the signature space A2.

Processing performed by the control unit 18 to realize the operation as described above will be described in detail in the following with reference to FIGS. 9 to 14.

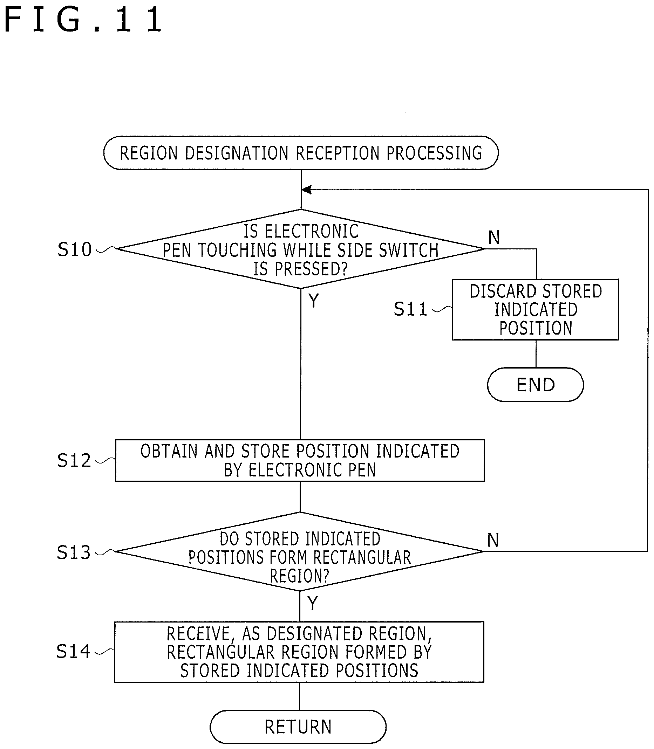

FIG. 9 shows processing performed by the control unit 18. As shown in the figure, the control unit 18 first performs processing of receiving a designation of a region (first designated region) by the user (region designation reception processing) (step S1). This processing is processing of detecting a predetermined operation performed by the user. Various kinds of operations are conceivable as concrete details of the predetermined operation. FIGS. 11 to 13 each show an example of the concrete details of the predetermined operation. The following description will therefore be made while sequentially referring to FIGS. 11 to 13. Incidentally, all of the operations shown in FIGS. 11 to 13 may be incorporated into the control unit 18 (that is, there may be a plurality of region designating methods), or only a part of the operations shown in FIGS. 11 to 13 may be incorporated into the control unit 18.

First, FIG. 11 represents an example in which an operation of drawing a rectangular region with the electronic pen 4 while pressing the side switch 5 is an operation for designating a designated region. The control unit 18 in the present example first detects whether the user is touching the electronic pen 4 to the panel surface while pressing the side switch 5, by referring to the calculated value C2 and the pen information supplied from the position calculating unit 17 (step S10). The control unit 18 is configured to be able to store positions indicated by the electronic pen 4 in the storage device not shown in the figures. When a result of the determination in step S10 is negative, the control unit 18 discards the indicated positions stored thus far (step S11). The control unit 18 then ends the processing.

When the result of the determination in step S10 is affirmative, on the other hand, the control unit 18 obtains a position indicated by the electronic pen 4 at that time from the calculated value C2, and stores the position indicated by the electronic pen 4 in the storage device not shown in the figures (step S12). Then, the control unit 18 refers to a series of indicated positions stored thus far, and determines whether or not those indicated positions constitute a rectangular region (step S13). When a result of the determination does not indicate that a rectangular region is formed, the control unit 18 returns the processing to step S10. When a rectangular region is formed, on the other hand, the control unit 18 receives, as a designated region, the rectangular region formed by the series of indicated positions stored thus far (step S14). The control unit 18 then shifts the processing to step S2 in FIG. 9.

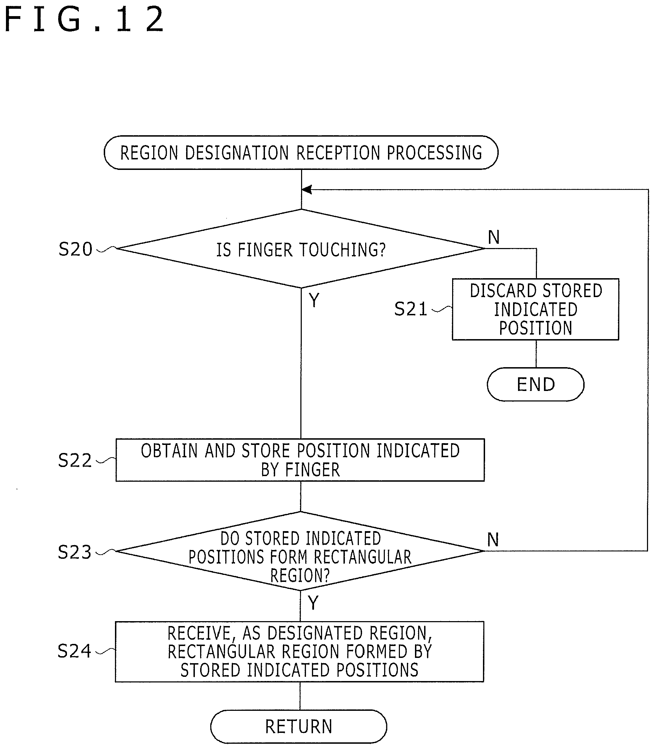

FIG. 12 shows an example in which an operation of drawing a rectangular region with the finger 6 is an operation for designating a designated region. The control unit 18 in the present example first detects whether the user is touching the finger 6 to the panel surface, by referring to the calculated value C1 supplied from the position calculating unit 17 (step S20). The control unit 18 is configured to be able to store positions indicated by the finger 6 in the storage device not shown in the figures. When a result of the determination in step S20 is negative, the control unit 18 discards indicated positions stored thus far (step S21). The control unit 18 then ends the processing.

When the result of the determination in step S20 is affirmative, on the other hand, the control unit 18 obtains a position indicated by the finger 6 at that time from the calculated value C1, and stores the position indicated by the finger 6 in the storage device not shown in the figures (step S22). Then, the control unit 18 refers to a series of indicated positions stored thus far, and determines whether or not those indicated positions constitute a rectangular region (step S23). When a result of the determination does not indicate that a rectangular region is formed, the control unit 18 returns the processing to step S20. When a rectangular region is formed, on the other hand, the control unit 18 receives, as a designated region, the rectangular region formed by the series of indicated positions stored thus far (step S24). The control unit 18 then shifts the processing to step S2 in FIG. 9.

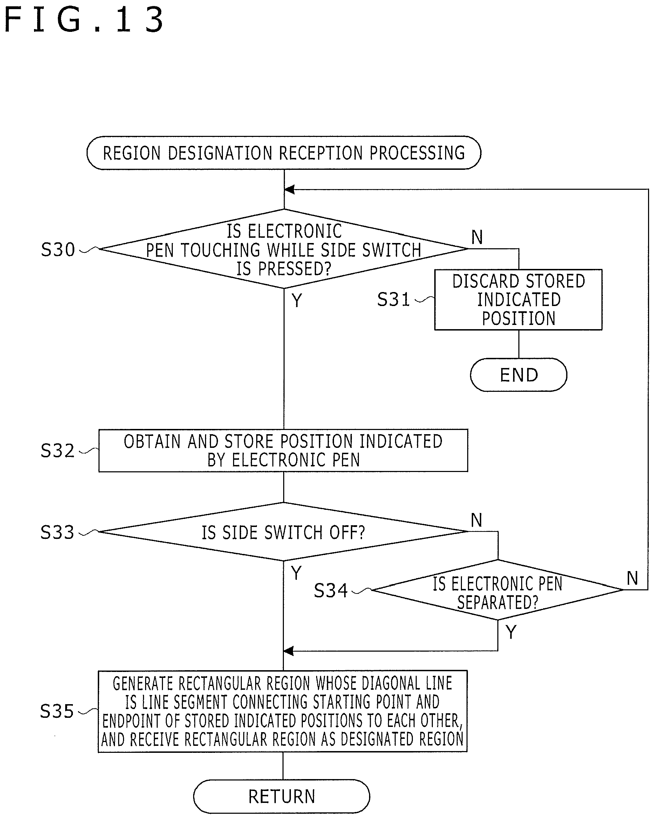

FIG. 13 shows an example in which an operation of drawing a line segment with the electronic pen 4 while pressing the side switch 5 is an operation for designating a designated region. The control unit 18 in the present example first detects whether the user is touching the electronic pen 4 to the panel surface while pressing the side switch 5, by referring to the calculated value C2 and the pen information supplied from the position calculating unit 17 (step S30). The control unit 18 is configured to be able to store positions indicated by the electronic pen 4 in the storage device not shown in the figures. When a result of the determination in step S30 is negative, the control unit 18 discards indicated positions stored thus far (step S31). The control unit 18 then ends the processing.

When the result of the determination in step S30 is affirmative, on the other hand, the control unit 18 obtains a position indicated by the electronic pen 4 at that time from the calculated value C2, and stores the position indicated by the electronic pen 4 in the storage device not shown in the figures (step S32). The control unit 18 next detects whether or not the side switch 5 is off (step S33). When detecting as a result of the detection that the side switch 5 is not off, the control unit 18 determines whether or not the electronic pen 4 is separated from the touch panel 2 (step S34). When determining in step S34 that the electronic pen 4 is not separated from the touch panel 2, the control unit 18 returns the processing to step S30. When detecting in step S33 that the side switch 5 is off, or when determining in step S34 that the electronic pen 4 is separated from the touch panel 2, on the other hand, the control unit 18 generates a rectangular region whose diagonal line is a line segment connecting an indicated position among the stored series of indicated positions which indicated position corresponds to a starting point to an indicated position among the stored series of indicated positions which indicated position corresponds to an endpoint, and receives the rectangular region as a designated region (step S35). The control unit 18 then shifts the processing to step S2 in FIG. 9.

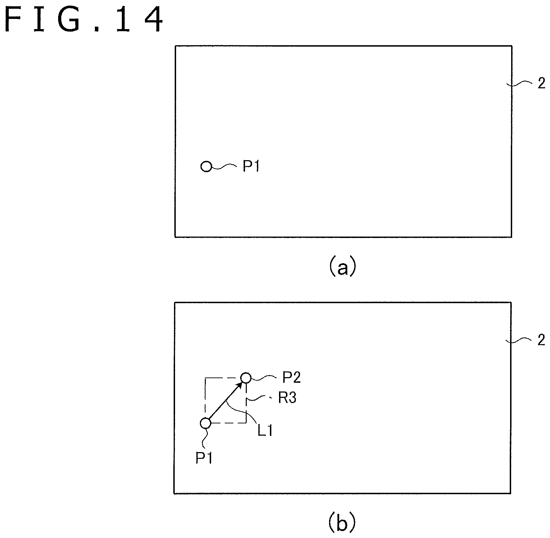

The example of FIG. 13 will be described in more detail with reference to FIG. 14. FIG. 14(a) shows a state in which the touch of the electronic pen 4 is detected in step 30 in FIG. 13. A position P1 touched in this state is the starting point in step S35. Next, FIG. 14(b) shows a state in which the turning off of the side switch 5 is detected in FIG. 33, or a state in which the separation of the electronic pen 4 is detected in FIG. 34. A position P2 indicated by the electronic pen 4 when these detections are made is the endpoint in step S35. As shown in FIG. 14(b), the control unit 18 sets a line segment L1 connecting the position P1 and the position P2 to each other, and receives a rectangle whose diagonal line is this line segment L1 as a designated region R3.

The description returns to FIG. 9. Receiving the region designation in step S1, the control unit 18 displays display data (first display data) corresponding to the designated region (steps S2 and S3). The shading shown in FIG. 6 and FIG. 8 (translucent shading covering the region other than the designated region) is an example of this display data. The display of the display data enables the user to clearly recognize the region specified by the user himself/herself. Incidentally, concrete contents of the display data are not limited to the shading as described above. A straight line image or a broken line image showing edges of the designated region, for example, may be displayed as the display data.

Next, the control unit 18 makes pop-up display inquiring of the user about a restriction target region and a restriction target input tool (step S4). FIG. 10 shows a concrete example of this pop-up display. As shown in the figure, the pop-up display in the present example includes an option button for allowing the user to select one of the "inside of the designated region" and the "outside of the designated region" as a restriction target region, an option button for allowing the user to select one of the "electronic pen" and the "finger" as a restriction target input tool, an "enter" button, and a "cancel" button. Incidentally, while an example in which the user is allowed to select the restriction target region, the restriction target input tool, and whether or not to permit execution on one pop-up display at a time is shown in this case, a plurality of pop-up displays may be made sequentially to thereby allow the user to make the selections one by one. In addition, the subsequent processing may be made to proceed on the basis of preset data without inquiring of the user in this step (step S4 is omitted).

Returning to FIG. 9, when the "cancel" button is depressed on the pop-up screen ("cancel" determination in step S5), the control unit 18 ends the processing. In this case, input by indicators is not limited. When the "enter" button is depressed on the pop-up screen ("enter" determination in step S5), on the other hand, the control unit 18 determines whether the selected input tool is the "electronic pen" or the "finger" (step S6). When a result of the determination indicates that the selected input tool is the "electronic pen," the control unit 18 thereafter performs signal processing while ignoring the calculated value C2 indicating a position within the restriction target region (step S7). The user thus recognizes that writing to the inside of the limitation target region with the electronic pen 4 cannot be performed. When the selected input tool is the "finger," on the other hand, the control unit 18 thereafter performs signal processing while ignoring the calculated value C1 indicating a position within the restriction target region (step S8). The user thus recognizes that writing to the inside of the restriction target region with the finger 6 cannot be performed.

As described above, the touch type input system and the indicator detecting device 1 according to the present embodiment makes it possible to restrict input by an indicator (the electronic pen 4 or the finger 6) only in a partial region within the panel surface (that is, the "inside" or "outside" of the designated region). In addition, it is possible to select an indicator whose input is to be restricted.

For example, in the foregoing embodiment, no particular mention has been made of operation after the control unit 18 starts signal processing differing between a calculated value indicating a position corresponding to the inside of the designated region and a calculated value indicating a position corresponding to the outside of the designated region. However, the indicator detecting device 1 may of course be provided with a mechanism for returning the signal processing of the control unit 18 to a normal state. To cite a concrete example, a button image may be displayed within the display region 14a, for example, and the signal processing of the control unit 18 may be returned to the normal state with the touching of this button image with the finger 6 or the electronic pen 4 as a trigger.

In addition, in the region designation reception processing shown in FIG. 11 and FIG. 13, a designated region is received in response to the predetermined operation that the user performs while pressing the side switch 5 of the electronic pen 4. However, another means such as the button 3 of the indicator detecting device 1 (see FIG. 1) can also be used in place of the side switch 5.

Furthermore, in addition to the drawing of a rectangle as shown in FIG. 11 and FIG. 12 and the drawing of a line segment as shown in FIG. 13, various kinds of operations for designating a region can be used, such for example as an operation of touching with four fingers and sliding in the x-direction (in this case, it suffices for example to set, as a designated region, a region enclosed by a straight line including one endmost position in the x-direction among touched coordinates and extending in the y-direction, a straight line including another endmost position in the x-direction among the touched coordinates and extending in the y-direction, a straight line including one endmost position in the y-direction among the touched coordinates and extending in the x-direction, and a straight line including another endmost position in the y-direction among the touched coordinates and extending in the x-direction). In short, any operation can be employed as an operation for designating a region as long as the operation can designate a region.

In addition, the designation of a region can be received without depending on user operation. For example, when an operating system or an application makes a predetermined pop-up display (second display data) such as a screen property setting screen in Windows (registered trademark), a region within the pop-up display may be received as a designated region (second designated region). In this case, the user can perform input to the input area within the pop-up screen by an input method suitable for the contents of the screen displayed in a pop-up manner.

In addition, in the foregoing embodiment, description has been made by taking an example in which a sensor of a capacitive system is used as the sensor 12, and a sensor of an EMR system is used as the sensor 13. However, different systems can also be used for the respective sensors. For example, a sensor of a pressure sensitive system may be used as the sensor 12. In addition, a sensor of an ES system (system in which power supply means such as a battery is provided to the electronic pen itself, and power transmission from the sensor is not performed) may be used as the sensor 13. Incidentally, when concrete systems for the respective sensors 12 and 13 are determined, it is desirable to configure the sensors 12 and 13 such that an indicator as an object for detection by the sensor 12 is not detected by the sensor 13 and an indicator as an object for detection by the sensor 13 is not detected by the sensor 12.

In addition, in the foregoing embodiment, description has been made by taking as an example a case where the two sensors 12 and 13 are used. However, the present invention is also applicable to a case where only one sensor is used. This is effective for not only a case where input is performed to the above-described signature space but also a case where for example mouse input can also be performed, a case where a moving image is displayed, and the like. In the former case, an operation can be realized such that mouse input is enabled while input by touch operation is restricted on the inside of the designated region (or the outside of the designated region). In the latter case, by restricting input by an indicator within a region in which a moving image is displayed, it is possible to prevent the moving image from being stopped by an erroneous touch.

### Description of Reference Symbols

- 1: Indicator detecting device
- 2: Touch panel
- 3: Button
- 4: Electronic pen
- 5: Side switch
- 6: Finger
- 11: Cover
- 12, 13: Sensor
- 12A: First concrete example of the sensor 12
- 12B: Second concrete example of the sensor 12
- 12C: Third concrete example of the sensor 12
- 12D: Fourth concrete example of the sensor 12
- 14: Display device
- 14a: Display region of the display device 14
- 15: Analog switch
- 16: Current-to-voltage converting unit
- 17: Position calculating unit
- 18,37: Control unit
- 20Aa, 20Ab: Electrode of the sensor 12A
- 20Ba to 20Bd: Electrode of the sensor 12B
- 20Ca to 20Cd: Electrode of the sensor 12C
- 20Da, 20Db: Electrode of the sensor 12D
- 21Aa, 21Ab: Terminal of the sensor 12A
- 21Ba to 21Bd: Terminal of the sensor 12B
- 21Ca to 21Cd: Terminal of the sensor 12C
- 21Da, 21Db: Terminal of the sensor 12D
- 30: Selecting circuit
- 31: Switch circuit
- 32: Amplifier
- 33: Detecting circuit
- 34: Low-pass filter
- 35: Sample and hold circuit
- 36: Analog-to-digital converting circuit
- 38: Oscillator
- 39: Current driver
- A1: Drawing region
- A2: Signature space
- C1: Calculated value indicating a position indicated by the finger 6
- C2: Calculated value indicating a position indicated by the electronic pen 4
- D1: Detecting region of the sensor 12
- D1a, D1b: Detecting region of the sensor 12D
- D2: Detecting region of the sensor 13
- L1: Line segment connecting a position P1 and a position P2 to each other
- LC, X₁ to X₄₀, Y₁ to Y₄₀: Loop coil
- O1: Output signal of the sensor 12
- 02: Output signal of the sensor 13
- P1, P2: Position indicated by the electronic pen 4
- R1 to R3: Designated region

## Claims

1. An indicator detecting device (1) comprising:
a sensor having a detecting region for detecting an indicator, and configured to output an output signal corresponding to a position indicated by the indicator in the detecting region;
a position calculating unit (17) electrically connected to the sensor, and configured to calculate a value indicating the position indicated by the indicator on a basis of the output signal; and
a control unit electrically connected to the position calculating unit (17), and configured to perform signal processing corresponding to the position indicated by the indicator on a basis of the value calculated by the position calculating unit (17);
**characterized in that**
when a plurality of values calculated by the position calculating unit (17) indicate that the indicator has designated a first designated region within the detecting region, the control unit performing signal processing differing between the calculated value indicating a position corresponding to an inside of the first designated region and the calculated value indicating a position corresponding to an outside of the first designated region,
wherein the indicator detecting device is configured to restrict input by the indicator in the inside of the first designated region,
or wherein the indicator detecting device is configured to restrict the indicator input in the detecting region other than the first designated region.

2. The indicator detecting device (1) according claim 1, wherein the indicator detecting device (1) is configured to restrict input by the indicator in the outside of the first designated region.

3. The indicator detecting device (1) according to claim 1 or 2, further comprising
a display device (14) having a display region corresponding to the detecting region,
wherein the control unit is configured to display first display data corresponding to the first designated region in the display region.

4. The indicator detecting device (1) according to any one of claims 1 to 3,
wherein the control unit is configured not to perform the signal processing based on the calculated value indicating the position corresponding to the outside of the first designated region when the plurality of calculated values calculated by the position calculating unit (17) indicate that the indicator has designated the first designated region within the detecting region.

5. The indicator detecting device (1) according to any one of claims 1 to 3, wherein the control unit is configured not to perform the signal processing based on the calculated value indicating the position corresponding to the inside of the first designated region when the plurality of values calculated by the position calculating unit (17) indicate that the indicator has designated the first designated region within the detecting region.

6. The indicator detecting device (1) according to claim 3,
wherein the control unit is configured to display second display data in the display region, and
when the control unit displays the second display data in the display region, the control unit designates a region within the detecting region as a second designated region, the region within the detecting region corresponding to a region in which the second display data is displayed within the display region, and subsequently performs signal processing differing between the calculated value indicating a position corresponding to an inside of the second designated region and the calculated value indicating a position corresponding to an outside of the second designated region.

7. The indicator detecting device (1)according to any one of claims 1 to 6, wherein
the sensor is a first sensor having a first detecting region for detecting a first indicator, and configured to output a first output signal corresponding to a position indicated by the first indicator in the first detecting region;
wherein the indicator detecting device further comprises
a second sensor having a second detecting region for detecting a second indicator, and configured to output a second output signal corresponding to a position indicated by the second indicator in the second detecting region;
the position calculating unit (17) electrically connected to each of the first sensor and the second sensor, and configured to calculate a first calculated value indicating the position indicated by the first indicator on a basis of the first output signal, and calculate a second calculated value indicating the position indicated by the second indicator on a basis of the second output signal; and
the control unit electrically connected to the position calculating unit (17), and configured to perform signal processing corresponding to the respective positions indicated by the first indicator and the second indicator on a basis of the first calculated value and the second calculated value calculated by the position calculating unit (17);
when a plurality of first values calculated by the position calculating unit (17) indicate that the first indicator has designated a first designated region within the first detecting region, the control unit performing signal processing differing between the first calculated value indicating a position corresponding to an inside of the first designated region and the first calculated value indicating a position corresponding to an outside of the first designated region, or performing signal processing differing between the second calculated value indicating a position corresponding to the inside of the first designated region and the second calculated value indicating a position corresponding to the outside of the first designated region.

8. The indicator detecting device (1) according to claim 7,
wherein the first sensor and the second sensor are arranged in a stacked manner such that the first detecting region and the second detecting region are superimposed on each other.

9. The indicator detecting device (1) according to claim 7 or 8,
wherein when the plurality of first values calculated by the position calculating unit (17) indicate that the first indicator has designated the first designated region within the first detecting region, the control unit performs signal processing differing between the first calculated value indicating a position corresponding to the inside of the first designated region and the first calculated value indicating a position corresponding to the outside of the first designated region, and performs signal processing differing between the second calculated value indicating a position corresponding to the inside of the first designated region and the second calculated value indicating a position corresponding to the outside of the first designated region.

10. The indicator detecting device (1) according to any one of claims 7 to 9,
wherein the first sensor is configured to generate the first output signal by a capacitive system, and
the second sensor is configured to generate the second output signal by an electromagnetic induction system.

11. The indicator detecting device (1) according to any one of claims 7 to 9,
wherein the first sensor is configured to generate the first output signal by an electromagnetic induction system, and
the second sensor is configured to generate the second output signal by a capacitive system.

12. A signal processing method of an indicator detecting device (1), the indicator detecting device (1) including a sensor having a detecting region for detecting an indicator, the signal processing method comprising:
a step of obtaining an output signal corresponding to a position indicated by the indicator;
a step of obtaining a value corresponding to the indicated position on a basis of the output signal;
**characterized by**
a step of determining on a basis of the calculated value whether or not the indicator has designated a first designated region within the detecting region; and
a step of, when determining that the indicator has designated the first designated region, performing signal processing differing between the calculated value indicating a position corresponding to an inside of the first designated region and the calculated value indicating a position corresponding to an outside of the first designated region,
wherein the indicator detecting device restricts input by the indicator in the inside of the first designated region,
or
wherein the indicator detecting device restricts the indicator input in the detecting region other than the first designated region.

13. The signal processing method of an indicator detecting device (1) according to claim 11, the indicator detecting device (1) including the sensor, which is a first sensor having a first detecting region for detecting a first indicator, and a second sensor having a second detecting region for detecting a second indicator, and the indicator detecting device (1) being adapted to perform signal processing corresponding to respective positions indicated by the first indicator and the second indicator, the signal processing method comprising:
a step of obtaining a first output signal corresponding to the position indicated by the first indicator in the first detecting region;
a step of obtaining a second output signal corresponding to the position indicated by the second indicator in the second detecting region;
a step of obtaining a first calculated value on a basis of the first output signal;
a step of obtaining a second calculated value on a basis of the second output signal;
a step of determining on a basis of the first calculated value whether or not the first indicator has designated a first designated region within the first detecting region; and
a step of performing signal processing differing between the first calculated value indicating a position corresponding to an inside of the first designated region and the first calculated value indicating a position corresponding to an outside of the first designated region, or performing signal processing differing between the second calculated value indicating a position corresponding to the inside of the first designated region and the second calculated value indicating a position corresponding to the outside of the first designated region.

## Patentansprüche

1. Zeigererkennungsvorrichtung (1) mit:
einem Sensor, der einen Erkennungsbereich zum Erkennen eines Zeigers aufweist und dazu eingerichtet ist, ein Ausgangssignal auszugeben, das einer von dem Zeiger in dem Erkennungsbereich angegebenen Position entspricht;
einer Positionsberechnungseinheit (17), die elektrisch mit dem Sensor verbunden ist und dazu eingerichtet ist, auf einer Basis des Ausgangssignals einen Wert zu berechnen, welcher die von dem Zeiger angegebene Position angibt; und
einer Steuereinheit, die elektrisch mit der Positionsberechnungseinheit (17) verbunden ist und dazu eingerichtet ist, auf einer Basis des von der Positionsberechnungseinheit (17) berechneten Werts eine Signalverarbeitung durchzuführen, welche der von dem Zeiger angegebenen Position entspricht;
**dadurch gekennzeichnet, dass**
wenn mehrere von der Positionsberechnungseinheit (17) berechnete Werte angeben, dass der Zeiger einen ersten ausgewiesenen Bereich innerhalb des Erkennungsbereichs ausgewiesen hat, die Steuereinheit eine Signalverarbeitung durchführt, welche zwischen einem Fall, bei dem der berechnete Wert eine Position angibt, die einem Inneren des ersten ausgewiesenen Bereichs entspricht, und einem Fall unterscheidet, bei dem der berechnete Wert eine Position angibt, die einem Äußeren des ersten ausgewiesenen Bereichs entspricht,
wobei die Zeigerkennungsvorrichtung dazu eingerichtet ist, eine Eingabe durch den Zeiger im Inneren des ersten ausgewiesenen Bereichs zu unterbinden,
oder
wobei die Zeigererkennungsvorrichtung dazu eingerichtet ist, die Zeigereingabe in dem Erkennungsbereich mit Ausnahme des ersten ausgewiesenen Bereichs zu unterbinden.

2. Zeigererkennungsvorrichtung (1) nach Anspruch 1, wobei die Zeigererkennungsvorrichtung (1) dazu eingerichtet ist, eine Eingabe durch den Zeiger im Äußeren des ersten ausgewiesenen Bereichs zu unterbinden.

3. Zeigererkennungsvorrichtung (1) nach Anspruch 1 oder 2, ferner mit:
einer Anzeigevorrichtung (14) mit einem Anzeigebereich, welcher dem Erkennungsbereich entspricht,
wobei die Steuereinheit dazu eingerichtet ist, erste Anzeigedaten anzuzeigen, die dem ersten ausgewiesenen Bereich in dem Anzeigebereich entsprechen.

4. Zeigererkennungsvorrichtung (1) nach einem der Ansprüche 1 bis 3,
wobei die Steuereinheit dazu eingerichtet ist, die Signalverarbeitung nicht auf einer Basis des berechneten Werts durchzuführen, der die dem Äußeren des ersten ausgewiesenen Bereichs entsprechende Position angibt, wenn die mehreren, berechneten Werte, die von der Positionsberechnungseinheit (17) berechnet sind, angeben, dass der Zeiger den ersten ausgewiesenen Bereich innerhalb des Erkennungsbereichs ausgewiesen hat.

5. Zeigererkennungsvorrichtung (1) nach einem der Ansprüche 1 bis 3,
wobei die Steuereinheit dazu eingerichtet ist, die Signalverarbeitung nicht auf einer Basis des berechneten Werts durchzuführen, der die dem Inneren des ersten ausgewiesenen Bereichs entsprechende Position angibt, wenn die mehreren von der Positionsberechnungseinheit (17) berechneten Werte angeben, dass der Zeiger den ersten ausgewiesenen Bereich innerhalb des Erkennungsbereichs ausgewiesen hat.

6. Zeigererkennungsvorrichtung (1) nach Anspruch 3,
wobei die Steuereinheit dazu eingerichtet ist, zweite Anzeigedaten in dem Anzeigebereich anzuzeigen, und
wenn die Steuereinheit die zweiten Anzeigedaten in dem Anzeigebereich anzeigt, die Steuereinheit einen Bereich innerhalb des Erkennungsbereichs als einen zweiten ausgewiesenen Bereich auszeichnet, wobei der Bereich innerhalb des Erkennungsbereichs einem Bereich entspricht, in welchem die zweiten Anzeigedaten innerhalb des Anzeigebereichs angezeigt werden, und anschließend eine Signalverarbeitung durchführt, welche zwischen einem Fall, bei dem der berechnete Wert eine Position angibt, die einem Inneren des zweiten ausgewiesenen Bereichs entspricht, und einem Fall unterscheidet, bei dem der berechnete Wert eine Position angibt, die einem Äußeren des zweiten ausgewiesenen Bereichs entspricht.

7. Zeigererkennungsvorrichtung (1) nach einem der Ansprüche 1 bis 6,
wobei der Sensor ein erster Sensor ist, der einen ersten Erkennungsbereich zum Erkennen eines ersten Zeigers aufweist und dazu eingerichtet ist, ein erstes Ausgangssignal auszugeben, welches einer von dem ersten Zeiger in dem ersten Erkennungsbereich angegebenen Position entspricht;
wobei die Zeigererkennungsvorrichtung ferner
einen zweiten Sensor aufweist, welcher einen zweiten Erkennungsbereich zum Erkennen eines zweiten Zeigers aufweist und dazu eingerichtet ist, ein zweites Ausgangssignal zu erkennen, welches einer von dem zweiten Zeiger in dem zweiten Erkennungsbereich angegebenen Position entspricht;
wobei die Positionsberechnungseinheit (17) sowohl mit dem ersten Sensor als auch mit dem zweiten Sensor elektrisch verbunden ist und dazu eingerichtet ist, einen ersten berechneten Wert, welcher die von dem ersten Zeiger angegebene Position angibt, auf einer Basis des ersten Ausgangssignals zu berechnen und einen zweiten berechneten Wert, welcher die von dem zweiten Zeiger angegebene Position angibt, auf einer Basis des zweiten Ausgangssignals zu berechnen; und
die Steuereinheit elektrisch mit der Positionsberechnungseinheit (17) verbunden ist und dazu eingerichtet ist, eine Signalverarbeitung, welche den jeweiligen von dem ersten Zeiger und dem zweiten Zeiger angegebenen Positionen entspricht, auf einer Basis des von der Positionsberechnungseinheit (17) berechneten ersten und zweiten berechneten Werts durchzuführen;
wenn mehrere von der Positionsberechnungseinheit (17) berechnete erste Werte angeben, dass der erste Zeiger einen ersten ausgewiesenen Bereich innerhalb des ersten Erkennungsbereichs ausgewiesen hat, die Steuereinheit eine Signalverarbeitung durchführt, welche zwischen einem Fall, bei dem der erste berechnete Wert eine Position angibt, die einem Inneren des ersten ausgewiesenen Bereichs entspricht, und einem Fall unterscheidet, bei dem der erste berechnete Wert eine Position angibt, die einem Äußeren des ersten ausgewiesenen Bereichs entspricht, oder eine Signalverarbeitung durchführt, welche zwischen einem Fall, bei dem der zweite berechnete Wert eine Position angibt, die dem Inneren des ersten ausgewiesenen Bereichs entspricht, und einem Fall unterscheidet, bei dem der zweite berechnete Wert eine Position angibt, welche dem Äußeren des ersten ausgewiesenen Bereichs entspricht.

8. Zeigererkennungsvorrichtung (1) nach Anspruch 7,
wobei der erste Sensor und der zweite Sensor auf gestapelte Weise derart angeordnet sind, dass der erste Erkennungsbereich und der zweite Erkennungsbereich übereinandergelagert sind.

9. Zeigererkennungsvorrichtung (1) nach Anspruch 7 oder 8,
wobei, wenn die mehreren von der Positionsberechnungseinheit (17) berechneten ersten Werte angeben, dass der erste Zeiger den ersten ausgewiesenen Bereich innerhalb des ersten Erkennungsbereichs ausgewiesen hat, die Steuereinheit eine Signalverarbeitung durchführt, welche zwischen einem Fall, bei dem der erste berechnete Wert eine Position angibt, die dem Inneren des ersten ausgewiesenen Bereichs entspricht, und einem Fall unterscheidet, bei dem der erste berechnete Wert eine Position angibt, welche dem Äußeren des ersten ausgewiesenen Bereichs entspricht, und eine Signalverarbeitung durchführt, welche zwischen einem Fall, bei dem der zweite berechnete Wert eine Position angibt, welche dem Inneren des ersten ausgewiesenen Bereichs entspricht, und einem Fall unterscheidet, bei dem der zweite berechnete Wert eine Position angibt, welche dem Äußeren des ersten ausgewiesenen Bereichs entspricht.

10. Zeigererkennungsvorrichtung (1) nach einem der Ansprüche 7 bis 9,
wobei der erste Sensor dazu eingerichtet ist, das erste Ausgangssignal mittels eines kapazitiven Systems zu erzeugen, und
der zweite Sensor dazu eingerichtet ist, das zweite Ausgangssignal mittels eines elektromagnetischen Induktionssystems zu erzeugen.

11. Zeigererkennungsvorrichtung (1) nach einem der Ansprüche 7 bis 9,
wobei der erste Sensor dazu eingerichtet ist, das erste Ausgangssignal mittels eines elektromagnetischen Induktionssystems zu erzeugen, und
der zweite Sensor dazu eingerichtet ist, das zweite Ausgangssignal mittels eines kapazitiven Systems zu erzeugen.

12. Signalverarbeitungsverfahren einer Zeigererkennungsvorrichtung (1), wobei die Zeigererkennungsvorrichtung (1) einen Sensor aufweist, welcher einen Erkennungsbereich zum Erkennen eines Zeigers aufweist, wobei das Signalverarbeitungsverfahren umfasst:
einen Schritt eines Erlangens eines Ausgangssignals, welches einer von dem Zeiger angegebenen Position entspricht;
einen Schritt eines Erlangens eines Werts, welcher der angegebenen Position entspricht, basierend auf dem Ausgangssignal;
**gekennzeichnet durch**:
einen Schritt eines Bestimmens, auf einer Basis des berechneten Werts, ob der Zeiger einen ersten ausgewiesenen Bereich innerhalb des Erkennungsbereichs ausgezeichnet hat oder nicht; und
einen Schritt eines Durchführens, wenn bestimmt wird, dass der Zeiger den ersten ausgewiesenen Bereich ausgezeichnet hat, einer Signalverarbeitung, welche zwischen einem Fall, bei dem der berechnete Wert eine Position angibt, die einem Inneren des ersten ausgewiesenen Bereichs entspricht, und einem Fall unterscheidet, bei dem der berechnete Wert eine Position angibt, welche einem Äußeren des ersten ausgewiesenen Bereichs entspricht,
wobei die Zeigererkennungsvorrichtung eine Eingabe durch den Zeiger im Inneren des ersten ausgewiesenen Bereichs unterbindet,
oder
wobei die Zeigererkennungsvorrichtung die Zeigereingabe in dem Erkennungsbereich mit Ausnahme des ersten ausgewiesenen Bereichs unterbindet.

13. Signalverarbeitungsverfahren einer Zeigererkennungsvorrichtung (1) nach Anspruch 11, wobei die Zeigererkennungsvorrichtung (1) den Sensor, welcher ein erster Sensor mit einem ersten Erkennungsbereich zum Erkennen eines ersten Zeigers ist, sowie einen zweiten Sensor mit einem zweiten Erkennungsbereich zum Erkennen eines zweiten Zeigers aufweist, und die Zeigererkennungsvorrichtung (1) dazu ausgestaltet ist, eine Signalverarbeitung durchzuführen, welche jeweiligen von dem ersten Zeiger und dem zweiten Zeiger angegebenen Positionen entspricht, wobei das Signalverarbeitungsverfahren umfasst:
einen Schritt eines Erlangens eines ersten Ausgangssignals, welches der von dem ersten Zeiger in dem ersten Erkennungsbereich angegebenen Position entspricht;
einen Schritt eines Erlangens eines zweiten Ausgangssignals, welches der von dem zweiten Zeiger in dem zweiten Erkennungsbereich angegebenen Position entspricht;
einen Schritt eines Erlangens eines ersten berechneten Werts auf einer Basis des ersten Ausgangssignals;
einen Schritt eines Erlangens eines zweiten berechneten Werts auf einer Basis des zweiten Ausgangssignals;
einen Schritt eines Bestimmens, auf einer Basis des ersten berechneten Werts, ob der erste Zeiger einen ersten ausgewiesenen Bereich innerhalb des ersten Erkennungsbereichs ausgezeichnet hat oder nicht; und
einen Schritt eines Durchführens einer Signalverarbeitung, welche zwischen einem Fall, bei dem der erste berechnete Wert eine Position angibt, welche einem Inneren des ersten ausgewiesenen Bereichs entspricht, und einem Fall unterscheidet, bei dem der erste berechnete Wert eine Position angibt, welche einem Äußeren des ersten ausgewiesenen Bereichs entspricht, oder eines Durchführens einer Signalverarbeitung, welche zwischen einem Fall, bei dem der zweite berechnete Wert eine Position angibt, welche dem Inneren des ersten ausgewiesenen Bereichs entspricht, und einem Fall unterscheidet, bei dem der der zweite berechnete Wert eine Position angibt, welche dem Äußeren des ersten ausgewiesenen Bereichs entspricht.

## Revendications

1. Dispositif de détection d'indicateur (1) comprenant :
un capteur présentant une région de détection pour détecter un indicateur, et configuré de manière à fournir en sortie un signal de sortie correspondant à une position indiquée par l'indicateur dans la région de détection ;
une unité de calcul de position (17) connectée électriquement au capteur, et configurée de manière à calculer une valeur indiquant la position indiquée par l'indicateur sur la base du signal de sortie ; et
une unité de commande connectée électriquement à l'unité de calcul de position (17), et configurée de manière à mettre en oeuvre un traitement de signal correspondant à la position indiquée par l'indicateur sur la base de la valeur calculée par l'unité de calcul de position (17) ;
**caractérisé en ce que** :
lorsqu'une pluralité de valeurs calculées par l'unité de calcul de position (17) indique que l'indicateur a désigné une première région désignée au sein de la région de détection, l'unité de commande met en oeuvre un traitement de signal qui diffère entre la valeur calculée indiquant une position correspondant à un intérieur de la première région désignée et la valeur calculée indiquant une position correspondant à un extérieur de la première région désignée ;
dans lequel le dispositif de détection d'indicateur est configuré de manière à restreindre une entrée par l'indicateur à l'intérieur de la première région désignée ; ou
dans lequel le dispositif de détection d'indicateur est configuré de manière à restreindre une entrée par l'indicateur dans la région de détection distincte de la première région désignée.

2. Dispositif de détection d'indicateur (1) selon la revendication 1, dans lequel le dispositif de détection d'indicateur (1) est configuré de manière à restreindre l'entrée par l'indicateur à l'extérieur de la première région désignée.

3. Dispositif de détection d'indicateur (1) selon la revendication 1 ou 2, comprenant en outre :
un dispositif d'affichage (14) présentant une région d'affichage correspondant à la région de détection ;
dans lequel l'unité de commande est configurée de manière à afficher des premières données d'affichage correspondant à la première région désignée dans la région d'affichage.

4. Dispositif de détection d'indicateur (1) selon l'une quelconque des revendications 1 à 3,
dans lequel l'unité de commande est configurée de manière à ne pas mettre en oeuvre le traitement de signal sur la base de la valeur calculée indiquant la position correspondant à l'extérieur de la première région désignée lorsque la pluralité de valeurs calculées par l'unité de calcul de position (17) indique que l'indicateur a désigné la première région désignée au sein de la région de détection.

5. Dispositif de détection d'indicateur (1) selon l'une quelconque des revendications 1 à 3,
dans lequel l'unité de commande est configurée de manière à ne pas mettre en oeuvre le traitement de signal sur la base de la valeur calculée indiquant la position correspondant à l'intérieur de la première région désignée lorsque la pluralité de valeurs calculées par l'unité de calcul de position (17) indique que l'indicateur a désigné la première région désignée au sein de la région de détection.

6. Dispositif de détection d'indicateur (1) selon la revendication 3,
dans lequel l'unité de commande est configurée de manière à afficher des secondes données d'affichage dans la région d'affichage ; et
lorsque l'unité de commande affiche les secondes données d'affichage dans la région d'affichage, l'unité de commande désigne une région dans la région de détection en tant qu'une seconde région désignée, la région dans la région de détection correspondant à une région dans laquelle les secondes données d'affichage sont affichées dans la région d'affichage, et elle met en oeuvre subséquemment un traitement de signal qui diffère entre la valeur calculée indiquant une position correspondant à un intérieur de la seconde région désignée et la valeur calculée indiquant une position correspondant à un extérieur de la seconde région désignée.

7. Dispositif de détection d'indicateur (1) selon l'une quelconque des revendications 1 à 6, dans lequel
le capteur est un premier capteur présentant une première région de détection pour détecter un premier indicateur, et est configuré de manière à fournir en sortie un premier signal de sortie correspondant à une position indiquée par le premier indicateur dans la première région de détection ;
dans lequel le dispositif de détection d'indicateur comprend en outre :
un second capteur présentant une seconde région de détection pour détecter un second indicateur, et configuré de manière à fournir en sortie un second signal de sortie correspondant à une position indiquée par le second indicateur dans la seconde région de détection ;
l'unité de calcul de position (17) est connectée électriquement à chaque capteur parmi le premier capteur et le second capteur, et est configurée de manière à calculer une première valeur calculée indiquant la position indiquée par le premier indicateur sur la base du premier signal de sortie, et à calculer une seconde valeur calculée indiquant la position indiquée par le second indicateur sur la base du second signal de sortie ; et
l'unité de commande est connectée électriquement à l'unité de calcul de position (17), et est configurée de manière à mettre en oeuvre un traitement de signal correspondant aux positions respectives indiquées par le premier indicateur et le second indicateur sur la base de la première valeur calculée et de la seconde valeur calculée par l'unité de calcul de position (17) ;
lorsqu'une pluralité de premières valeurs calculées par l'unité de calcul de position (17) indique que le premier indicateur a désigné une première région désignée dans la première région de détection, l'unité de commande met en oeuvre un traitement de signal qui diffère entre la première valeur calculée indiquant une position correspondant à un intérieur de la première région désignée et la première valeur calculée indiquant une position correspondant à un extérieur de la première région désignée, ou met en oeuvre un traitement de signal qui diffère entre la seconde valeur calculée indiquant une position correspondant à l'intérieur de la première région désignée et la seconde valeur calculée indiquant une position correspondant à l'extérieur de la première région désignée.

8. Dispositif de détection d'indicateur (1) selon la revendication 7,
dans lequel le premier capteur et le second capteur sont agencés de manière empilée de sorte que la première région de détection et la seconde région de détection sont mutuellement superposées.

9. Dispositif de détection d'indicateur (1) selon la revendication 7 ou 8,
dans lequel lorsque la pluralité de premières valeurs calculées par l'unité de calcul de position (17) indique que le premier indicateur a désigné la première région désignée dans la première région de détection, l'unité de commande met en oeuvre un traitement de signal qui diffère entre la première valeur calculée indiquant une position correspondant à l'intérieur de la première région désignée et la première valeur calculée indiquant une position correspondant à l'extérieur de la première région désignée, et met en oeuvre un traitement de signal qui diffère entre la seconde valeur calculée indiquant une position correspondant à l'intérieur de la première région désignée et la seconde valeur calculée indiquant une position correspondant à l'extérieur de la première région désignée.

10. Dispositif de détection d'indicateur (1) selon l'une quelconque des revendications 7 à 9,
dans lequel le premier capteur est configuré de manière à générer le premier signal de sortie par le biais d'un système capacitif ; et
dans lequel le second capteur est configuré de manière à générer le second signal de sortie par le biais d'un système à induction électromagnétique.

11. Dispositif de détection d'indicateur (1) selon l'une quelconque des revendications 7 à 9,
dans lequel le premier capteur est configuré de manière à générer le premier signal de sortie par le biais d'un système à induction électromagnétique, et
dans lequel le second capteur est configuré de manière à générer le second signal de sortie par le biais d'un système capacitif.

12. Procédé de traitement de signal d'un dispositif de détection d'indicateur (1), le dispositif de détection d'indicateur (1) incluant un capteur présentant une région de détection pour détecter un indicateur, le procédé de traitement de signal comprenant :
une étape consistant à obtenir un signal de sortie correspondant à une position indiquée par l'indicateur ;
une étape consistant à obtenir une valeur correspondant à la position indiquée sur la base du signal de sortie ;
**caractérisé par** :
une étape consistant à déterminer, sur la base de la valeur calculée, si l'indicateur a désigné ou non une première région désignée au sein de la région de détection ; et
une étape consistant à, dans le cadre de l'étape consistant à déterminer que l'indicateur a désigné la première région désignée, mettre en oeuvre un traitement de signal qui diffère entre la valeur calculée indiquant une position correspondant à un intérieur de la première région désignée et la valeur calculée indiquant une position correspondant à un extérieur de la première région désignée ;
dans lequel le dispositif de détection d'indicateur restreint une entrée par l'indicateur à l'intérieur de la première région désignée ; ou
dans lequel le dispositif de détection d'indicateur restreint une entrée par l'indicateur dans la région de détection distincte de la première région désignée.

13. Procédé de traitement de signal d'un dispositif de détection d'indicateur (1) selon la revendication 11, dans lequel le dispositif de détection d'indicateur (1) inclut le capteur, lequel correspond à un premier capteur présentant une première région de détection pour détecter un premier indicateur, et à un second capteur présentant une seconde région de détection pour détecter un second indicateur, et dans lequel le dispositif de détection d'indicateur (1) est apte à mettre en oeuvre un traitement de signal correspondant aux positions respectives indiquées par le premier indicateur et le second indicateur, le procédé de traitement de signal comprenant :
une étape consistant à obtenir un premier signal de sortie correspondant à la position indiquée par le premier indicateur dans la première région de détection ;
une étape consistant à obtenir un second signal de sortie correspondant à la position indiquée par le second indicateur dans la seconde région de détection ;
une étape consistant à obtenir une première valeur calculée sur la base du premier signal de sortie ;
une étape consistant à obtenir une seconde valeur calculée sur la base du second signal de sortie ;
une étape consistant à déterminer, sur la base de la première valeur calculée, si le premier indicateur a désigné ou non une première région désignée dans la première région de détection ; et
une étape consistant à mettre en oeuvre un traitement de signal qui diffère entre la première valeur calculée indiquant une position correspondant à un intérieur de la première région désignée et la première valeur calculée indiquant une position correspondant à un extérieur de la première région désignée, ou à mettre en oeuvre un traitement de signal qui diffère entre la seconde valeur calculée indiquant une position correspondant à l'intérieur de la première région désignée et la seconde valeur calculée indiquant une position correspondant à l'extérieur de la première région désignée.
